# EUROPEAN PATENT APPLICATION

(11) **EP 4 782 246 A1**
(43) Date of publication of application: **29.07.2026**
(21) Application number: 25218173.0
(22) Date of filing: 25.11.2025
(51) Int. Cl.: B60K 35/29

(54) **CONTROL PANELS AND USER INTERFACES FOR HEAVY EQUIPMENT VEHICLES**

(30) Priority: 24.01.2025 US 202519036789
(71) Applicant: Deere & Company, Moline, IL 61265 (US)
(72) Inventor: Wickman, Hanna J., Mannheim (DE); Leffler, Leah B., Mannheim (DE); Hoffman, Joshua D., Mannheim (DE); Kwak, Michelle R., Mannheim (DE); Dicken, Cody B., Mannheim (DE); Bezdek, Mikel A., Mannheim (DE); Murray, Cole L., Mannheim (DE); Leifker, Jeremy A., Mannheim (DE)
(74) Representative: Holst, Sönke

(57) **Abstract**

Systems, apparatus, articles of manufacture, and methods are disclosed for control panels and user interfaces for heavy equipment vehicles. An example apparatus includes processor circuitry to: identify functionality of a plurality of control operations of agricultural or construction equipment; identify frequency of use of the plurality of control operations; identify one or more sequences of use of the control operations; present a plurality of icons simultaneously on a user interface based on at least one of the frequency of use or the one or more sequences of use, respective icons indicative of the functionality of the control operation; and cause a change in an operating parameter of the agricultural or construction equipment based on an operator selection of one of the plurality of icons.

## Description

This disclosure relates generally to vehicle control panels and, more particularly, to control panels and user interfaces for heavy equipment vehicles.

### BACKGROUND

Heavy equipment vehicles such as agricultural and construction equipment typically include large panels with physical switches for an operator to control the equipment.

### SUMMARY

Systems, apparatus, articles of manufacture, and methods are disclosed for control panels and user interfaces for heavy equipment vehicles. An example apparatus includes processor circuitry to: identify functionality of a plurality of control operations of agricultural or construction equipment; identify frequency of use of the plurality of control operations; identify one or more sequences of use of the control operations; present a plurality of icons simultaneously on a user interface based on at least one of the frequency of use or the one or more sequences of use, respective icons indicative of the functionality of the control operation; and cause a change in an operating parameter of the agricultural or construction equipment based on an operator selection of one of the plurality of icons.

In one example, the processor circuitry is to access an identity of the operator and present the plurality of icons based on the identity.

In another example, the processor circuitry is to present the icons on an area of the user interface based on the frequency of use of the respective control operation.

In another example, the processor circuitry is to present the icon associated with an infrequently used control operation near a support frame for the user interface.

In another example, the control operations include two or more of setting up equipment, setting up environment, work planning, operational monitoring, or diagnostics.

In another example, the icons associated with the control operations are based on editable templates, the at least one processor circuit to receive the templates via a wireless communication.

In another example, the processor circuitry is to dynamically change the icons during operation of the equipment.

In another example, the processor circuitry is to dynamically change the icons based on an operating state of the equipment.

In another example, the control operations include a plurality of subsystems of the equipment.

In another example, the icons enable the operator to input an instruction via one or more of multi-option selection, value tuning, or binary state selection.

In another example, the processor circuitry is to: present a runtime screen on the user interface, the runtime screen to present an operating condition of the agricultural or construction equipment; and present the plurality of icons in a single layer over at least a portion of the runtime screen.

In another example, the processor circuitry is to implement machine learning algorithms based on prior control of the agricultural or construction equipment to identify at least one of the frequency of use of the plurality of control operations or the one or more sequences of use of the control operations.

An example non-transitory machine-readable storage medium includes instructions to cause at least one processor circuit to at least: identify functionality of a plurality of control operations of agricultural or construction equipment; identify frequency of use of the plurality of control operations; identify one or more sequences of use of the control operations; present a plurality of icons simultaneously on a user interface based on at least one of the frequency of use or the one or more sequences of use, respective icons indicative of the functionality of the control operation; and cause a change in an operating parameter of the agricultural or construction equipment based on an operator selection of one of the plurality of icons.

In one example, the instructions cause the at least one processor circuit to access an identity of the operator and present the plurality of icons based on the identity.

In another example, the instructions cause the at least one processor circuit to present the icons on an area of the user interface based on the frequency of use of the respective control operation.

In another example, the icons associated with the control operations are based on editable templates accessed via a wireless communication.

In another example, the instructions cause the at least one processor circuit to dynamically change the content of the user interface during operation of the equipment.

In another example, the instructions cause the at least one processor circuit to: present a runtime screen on the user interface, the runtime screen to present an operating condition of the agricultural or construction equipment; and present the plurality of icons in a single layer over at least a portion of the runtime screen.

In another example, the instructions cause the at least one processor circuit to update the runtime screen while the plurality of icons are presented over the runtime screen.

An example method implemented using one or more processors includes: identifying functionality of a plurality of control operations of agricultural or construction equipment; identifying frequency of use of the plurality of control operations; identifying one or more sequences of use of the control operations presenting a plurality of icons simultaneously on a user interface based on at least one of the frequency of use or the one or more sequences of use, respective icons indicative of the functionality of the control operation; and causing a change in an operating parameter of the agricultural or construction equipment based on an operator selection of one of the plurality of icons.

In one example, the method further included presenting the icons on an area of the user interface based on the frequency of use of the respective control operation.

In another example, the method further includes dynamically changing the content of the user interface during operation of the equipment and based on an operating state of the equipment.

In another example, the method further includes: presenting a runtime screen on the user interface, the runtime screen to present an operating condition of the agricultural or construction equipment; and presenting the plurality of icons in a single layer over at least a portion of the runtime screen.

In another example, the method further includes updating the runtime screen while the plurality of icons are presented over the runtime screen.

Example machine-readable storage includes machine-readable instructions, that when executed, implement a method or realize an apparatus as recited in any preceding example.

### BRIEF DESCRIPTION OF THE DRAWINGS

FIG. 1 illustrates example agricultural equipment including an example control panel.
FIG. 2 is a block diagram of example user interface circuitry for use with the control panel of FIG. 1.
FIGS. 3-21 are example user interfaces generated by the user interface circuitry.
FIG. 22 is a flowchart representative of example machine-readable instructions and/or example operations that may be executed, instantiated, and/or performed by example programmable circuitry to implement the user interface circuitry of FIG. 2.
FIG. 23 is a block diagram of an example processing platform including programmable circuitry structured to execute, instantiate, and/or perform the example machine-readable instructions and/or perform the example operations of FIG. 22 to implement the user interface circuitry of FIG. 2.

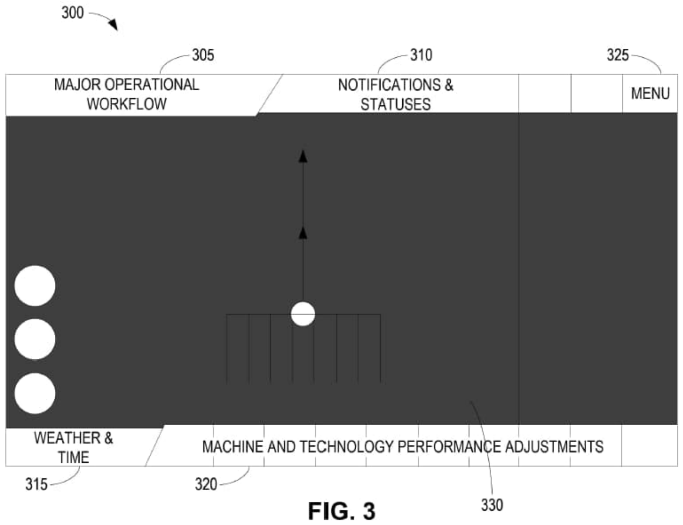

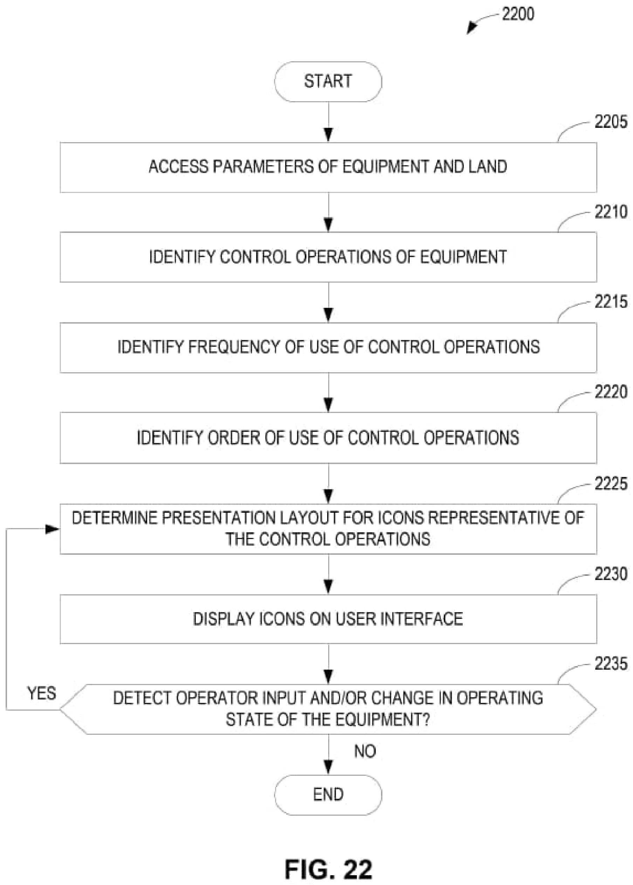

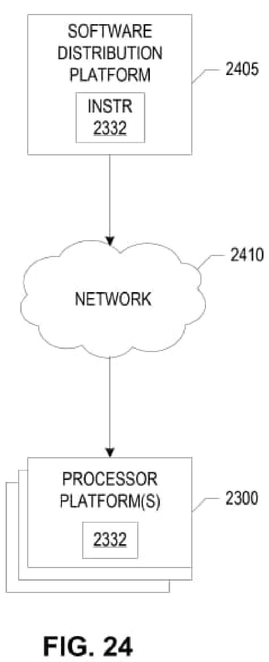

FIG. 24 is a block diagram of an example software/firmware/instructions distribution platform (e.g., one or more servers) to distribute software, instructions, and/or firmware (e.g., corresponding to the example machine-readable instructions of FIG. 22 and/or one or more templates of or elements of the user interfaces of FIGS. 3-21) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).
FIGS. 25-50 are additional example user interfaces generated by the user interface circuitry.

In general, the same reference numbers will be used throughout the drawing(s) and accompanying written description to refer to the same or like parts. The figures are not necessarily to scale. Instead, the thickness of the layers or regions may be enlarged in the drawings.

### DETAILED DESCRIPTION

Heavy equipment vehicles such as off-road vehicles, agricultural vehicles, construction vehicles, and/or road maintenance vehicles include display devices or control panels that display vehicle information including vehicle control functions, vehicle operations, vehicle operating characteristics, vehicle operating statistical information, and vehicle maintenance information. The control panel is located in the cab or cockpit of the vehicle and is accessible by the vehicle operator to review and control current vehicle conditions, vehicle implement conditions, current environmental conditions, and/or to select from a variety of operations based on the task to be performed.

In some control panels, the selectable operations are displayed on a touch screen that the operator selects to start a vehicle operation, review and control a current operating condition of the vehicle, or review environmental inputs surrounding the vehicle. As operations and diagnostics become more sophisticated, the number of selectable options presented on the vehicle display that are selectable by an operator increase. Operator navigation of control panels including different user interfaces and vehicle and implement settings can be challenging. Accordingly, machine operation is increasingly complex and changes on a vehicle-by-vehicle basis. The accessibility and organization of the large amounts of information aid the vehicle operator during completion of tasks. Examples disclosed herein aid less experienced operators in the monitoring and control of heavy equipment, thereby freeing more experienced operators for other tasks.

Example control panels disclosed herein select what information and controls to present to the operator. Example control panels disclosed herein select where on user interfaces presented on the control panel to present the information and controls. Example control panels disclosed herein select when to present the information and controls to the operator. Example control panels disclosed herein present to the operator the vehicle features and functions that enable the operator to efficiently and effectively monitor and control the work vehicle.

In some examples, the selections of one or more of the type of information to be presented, the placement of the information, and/or the timing of the presentation of the information is intelligently executed using, for example, machine learning (ML) and/or other artificial intelligence (AI) processes at the control panel in the vehicle, at a remote facility, and/or via a cloud-based processing platform. AI, including ML, deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations. Examples disclosed herein can use Al-based algorithms to develop and assemble the user interfaces presented on the control panel based on prior use of the vehicle, its subsystems, and/or implements, based on functional capability of the vehicle, its subsystems, and/or implements, based on prior operator experience and control patterns, based on geographic location of the vehicle, and/or based on environmental information. The Al-based algorithms can be used to modify user interfaces based on usage of the vehicle, its subsystems, and/or implements over time. In some examples, the Al processing presents information and/or settings by dynamically identifying implement(s) connected to the machine (e.g., vehicle) and determining optimum settings. In some examples, the Al processing presents information and/or settings based on a work plan created remotely (e.g., via an operations center, a web-based operation management tool, etc.) and synced to the vehicle. In some examples, the Al processing presents information and/or settings by identifying and/or learning operator preferences. In some examples, where the Al processing is performed in the cloud or at a remote location, the Al processing leverages information that is gathered at the vehicle and communicated to the cloud-based processing platform and/or other remove location.

Examples disclosed herein identify functionality of a plurality of information and control operations of a vehicle such as agricultural or construction equipment and/or associated implements (e.g., vehicle attachments). Examples disclosed herein identify frequency of use of the plurality of information and control operations and one or more sequences of use of the control operations for different work tasks. In some examples, a plurality of icons are presented simultaneously on a user interface of the control panel based on the frequency of use of the information and control operations and/or based on the one or more sequences of use of the information and control operations. The icons are indicative of the functionality of the control operation. Operator selection of an icon is used to change an operating parameter of the vehicle.

An example sequence of use of information and control operations includes preparing the equipment (e.g., the vehicle and any associated implements), starting work, monitoring and adjusting operating parameters of the equipment, diagnostics, coordinating logistics, and finishing the work. In some examples, preparing the equipment includes connecting and configuring machines and technology. In some examples, starting work includes moving the equipment to a job site (e.g., a field for agricultural equipment) and positioning implements (e.g., unfolding a sprayer). In some examples, monitoring and adjusting include enablement of performance tracking, identification of job outcome, review of equipment performance indicators, and fine-tuning of operating parameters. In some examples, diagnostics includes troubleshooting tools to proactively solve issues, context sensitive alerts, and remote support to enable the equipment to continue operation. In some examples, coordinating logistics includes facilitating seamless operations with predictive data to enable continuous operation. In some examples, finishing the work includes documentation, data logging, insight gathering and recordation, transition to the next task, and transport of the equipment to the next job site.

In some examples, Al-based algorithms learn which of the controls is used more frequently and which controls are used in different sequences. Based on this knowledge, the user interfaces can be adjusted to highlight more frequently used controls and/or a sequence of controls.

Traditionally, the multitude of information and control operations are input by an operator navigating through a cluttered hierarchy of display menus and screens and/or through actuation of large panels of switches. Examples disclosed herein streamline the presentation of information and control operations to the operator and establish a clear and logical flow that combines comprehensive situational awareness, vehicle component and/or implement awareness (e.g., what implement(s) are coupled to the vehicle), easy access to detailed information, and intuitive interaction to enhance efficiency and usability of the equipment.

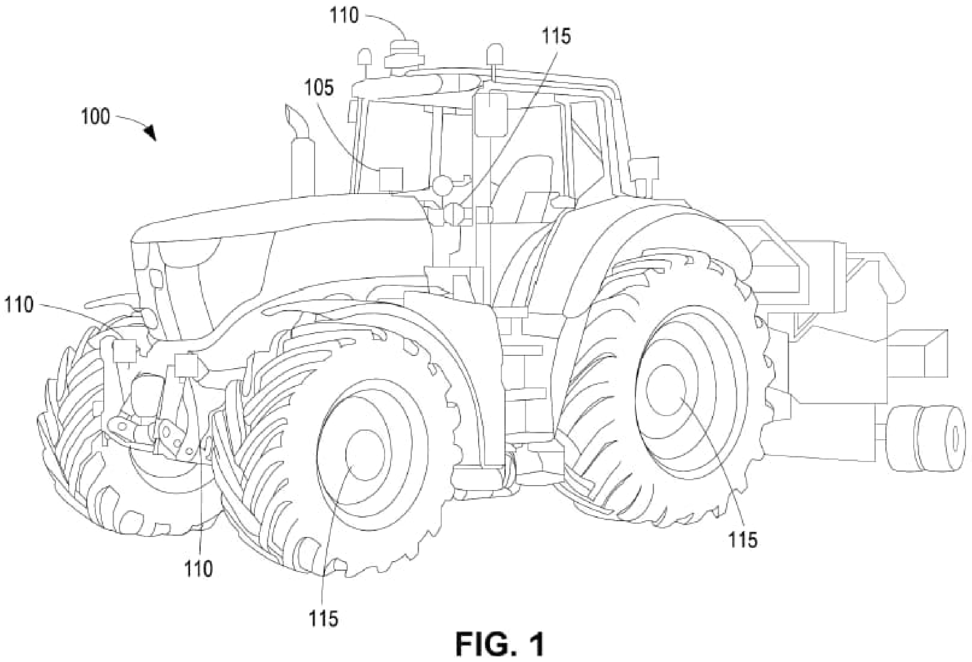

FIG. 1 illustrates an example vehicle 100 that may be a work vehicle such as an off-road work vehicle, agricultural machine, forestry machine, construction machine, road repair machine, and/or other type of heavy equipment vehicle. The vehicle 100 includes an example control panel 105 that is used to display information to an operator of the vehicle 100. Such information includes features or parameters of the vehicle 100, including, for example, speed, grade control, payload weighing, heading information, grade control systems, camera views, object detection, worksite map, etc. Other information includes environmental conditions, work plans, and/or other information disclosed herein and/or otherwise relevant or useful for operating the vehicle 100. The control panel 105 may be used to enter instructions including user preference parameters described herein. For example, the control panel 105 may be used for an operator to specify a desired layout or presentation of icons to access work functions.

The vehicle 100 also includes example sensors 110 to detect operating parameters of the vehicle 100 and/or environment details. Example sensors 110 include cameras, accelerometers, gyroscopes, inertial measurement units (IMUs), temperature gauges, magnetic wheel speed sensors, traction control sensors, vehicle kinematics sensors, global positioning system (GPS) sensors, vehicle speed sensors, ultrasonic sensors, laser scanners, radar wave transmitters and receivers, thermal sensors, imaging devices, structured light sensors, and other optical sensors. In some examples, there are additional sensors that can detect whether an implement is attached to the vehicle and what type of implement is attached. The data gathered and/or generated by the sensors is used by the operator and/or automatically by the vehicle 100 to adjust, modify, or otherwise set operating parameters of the vehicle 100.

The vehicle 100 also includes actuators 115. The actuators 115 are used to electrically and mechanically control the vehicle 100. The actuators 115 can include a steering controller, a braking controller, a propulsion controller, a grade control controller, an implement controller, etc. Operator control of the vehicle 100, its subsystems, and/or implements via selection of icons or other elements of the user interfaces disclosed herein can initiate action by one or more of the actuators 115 to cause a physical change in a state of the vehicle 100, its subsystems, and/or implements.

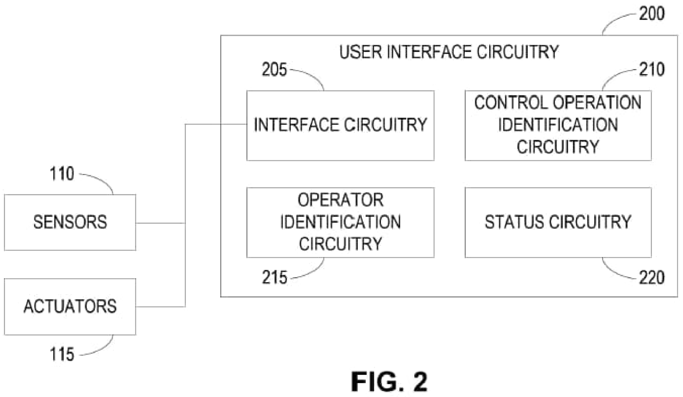

FIG. 2 is a block diagram of example user interface circuitry 200 used to operate the control panel 105 of FIG. 1. The user interface circuitry 200 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the user interface circuitry 200 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

The user interface circuitry 200 includes example interface circuitry 205, example control operation identification circuitry 210, example operator identification circuitry 215, and example status circuitry 220.

The user interface circuitry 200 creates user interfaces for the control panel 105 using information architecture that organizes information and controls in a logical operational workflow. In some examples, the operational workflow is based on a sequence of use of different controls during a specific operation or task. An example operational workflow based on a sequence of use includes establishing job settings, initiation of subsystems, runtime monitoring and logistics, and diagnostics. Thus, in this example, the user interface circuitry 200 presents icons and user interfaces for control of the vehicle 100 in this sequence. The sequence is based on the type of vehicle and any associated implements. For example, vehicle implements and attachments such as seeders, spreaders, round balers, sprayers, tillage, combine harvesters, windrower headers, buckets, sweepers, rollers, blades, jackhammers, etc. have different operations. The control operation identification circuitry 210 identifies the type of operations for different tasks based on the vehicle and implement types. The user interface circuitry 200 presents controls present user interfaces in the operational workflow sequence based on the identified vehicle and implement. In some examples, the framework of the user interfaces are consistent across different types of vehicles and/or implements. For example, the user interfaces for different types of machines may all include a task bar with controls, monitoring metrics and their details pages, work plan and settings overlay, etc. The content of the user interfaces for different machines will be variable based on the vehicle and/or implement.

In other examples, the operational workflow is based on a frequency of use of the controls. An example operational workflow based on frequency of use includes runtime monitoring and logistics, job settings, diagnostics, and seasonal settings. Seasonal settings may include specific controls based on a time of year. Other details related to seasonal settings are disclosed below. In some examples, the frequency of use of a control is based on a vehicle type and/or implement type. In some examples, the frequency of use of a control is based on an operator identity. In some examples, the frequency of use of a control is based on a combination of a vehicle type and/or implement type and an operator identity. The operator identity circuitry 215 can be used to determine or access an operator identity. An operator can be identified by a code (e.g., a bar code, QR code, or RFID tag in a badge), by biometrics (e.g., facial recognition, iris scan, fingerprint), and/or by the operator inputting identification information (e.g., a username and/or password) into the control panel 105. In some examples, one or more of the sensors 110 can be used to identify the operator. In some examples, the user interface circuitry 200 presents controls, icons, user interfaces on the control panel 105 based on the operator identity. For example, a skilled operator may have access to control more functionality of the vehicle 100 than a novice operator.

The interface circuitry 205 accesses data from the sensors 110. The data from the sensors 110 is incorporated into user interfaces generated by the user interface circuitry 200 for presentation to the operator. In some examples, the status circuitry 220 tracks and updates the status of different subsystems and other operating parameters of the vehicle 100, the implements, and/or the environment in which the vehicle 100 operates. The environment information can include information about the land (e.g., field conditions) and/or the weather.

When the operator inputs a command or other instruction into the control panel 105, the status circuitry 220 updates the status for the relevant subsystem and/or other vehicle parameter. The interface circuitry 205 communicates the command to one or more of the actuators 115. The actuators 115 effect the command by changing an operating parameter of the vehicle 100 and/or implement based on the input from the operator.

The user interface circuitry 200 develops and presents user interfaces on the control panel 105 with elements that are selected and organized in an intelligent manner to provide access to runtime screens, editable planned work, new work creation, subsystem initiation and deactivation, issue diagnosis and resolution, and editing settings that differ from season to season. In some examples, Al-based algorithms learn which controls and other elements of the user interfaces to present based on the usage and context in which the task is to be performed. The user interface components provide access to information and control settings associated with the different workflow steps disclosed herein. In some examples, the workflow steps are alternatively presented in a single layer over a runtime screen while in use. Thus, in some examples, there is a persistent runtime screen to enable the operator to maintain monitoring of current operation of the vehicle 100 while navigating through other settings. The runtime screen is updated based on the operating state of the equipment while the additional information is presented over the runtime screen.

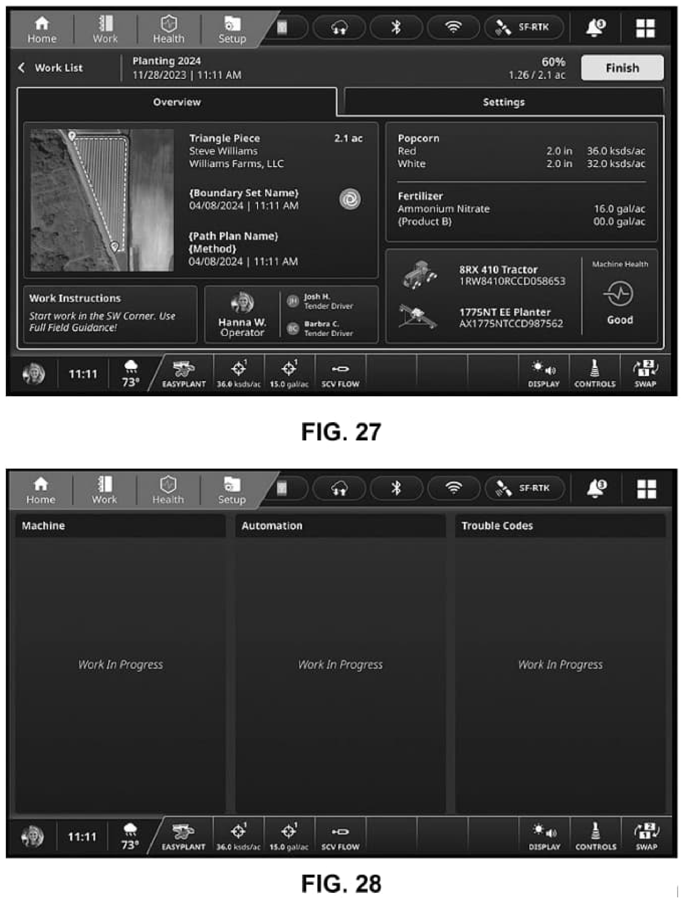

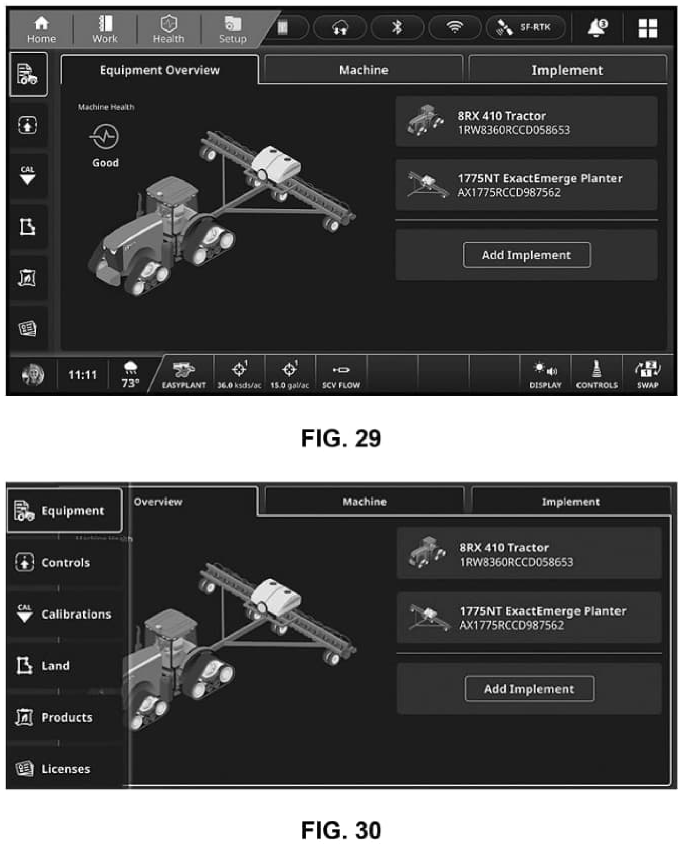

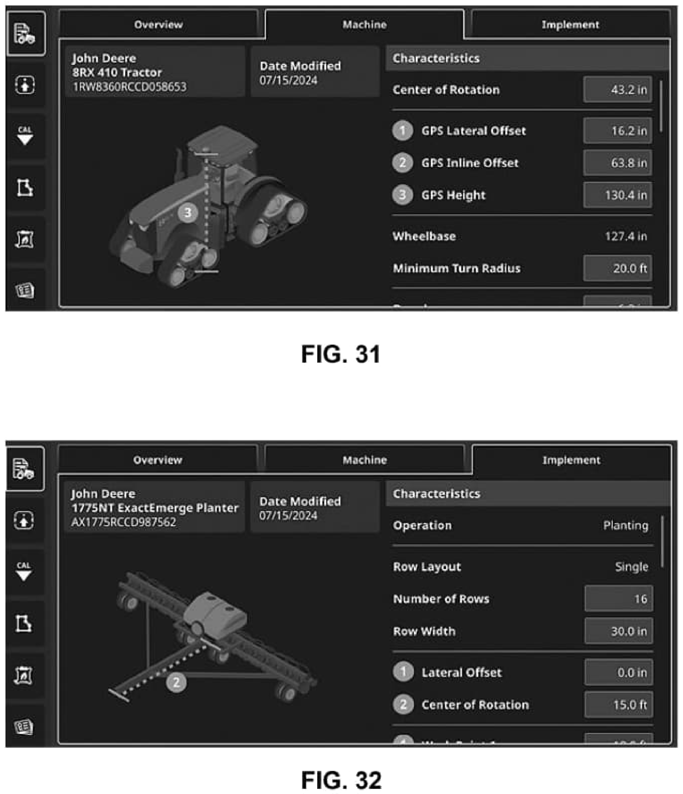

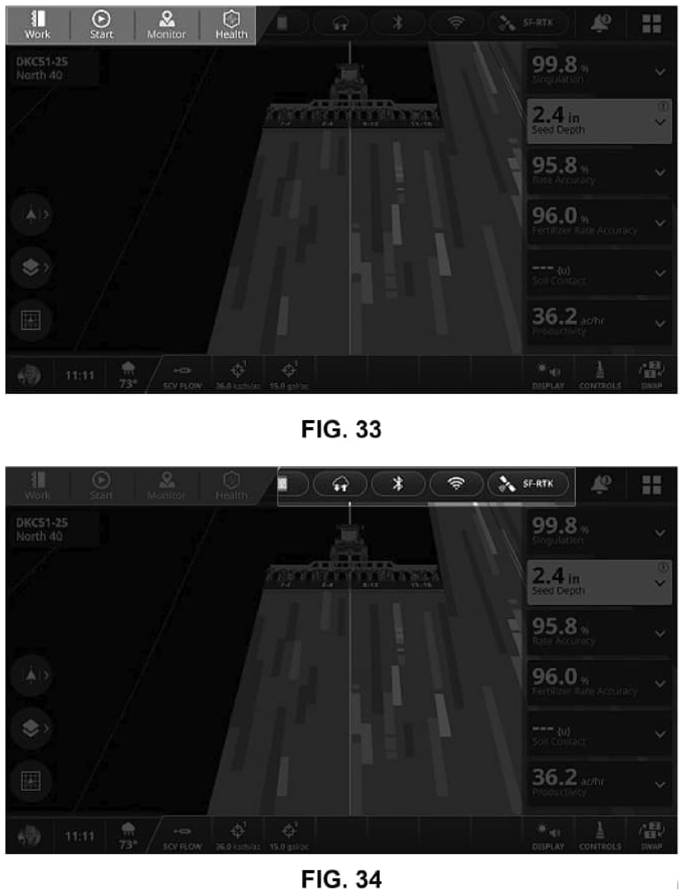

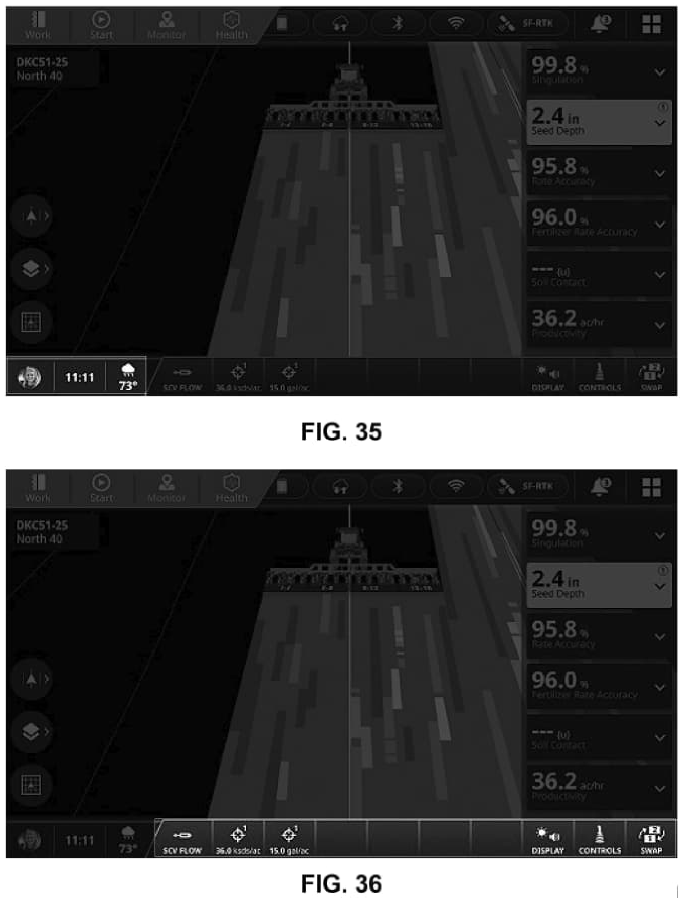

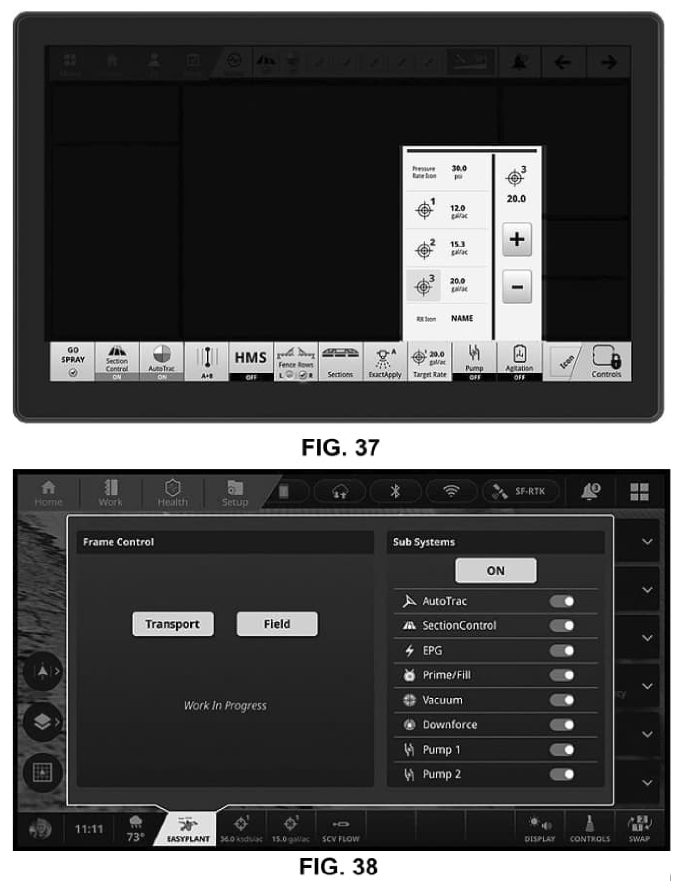

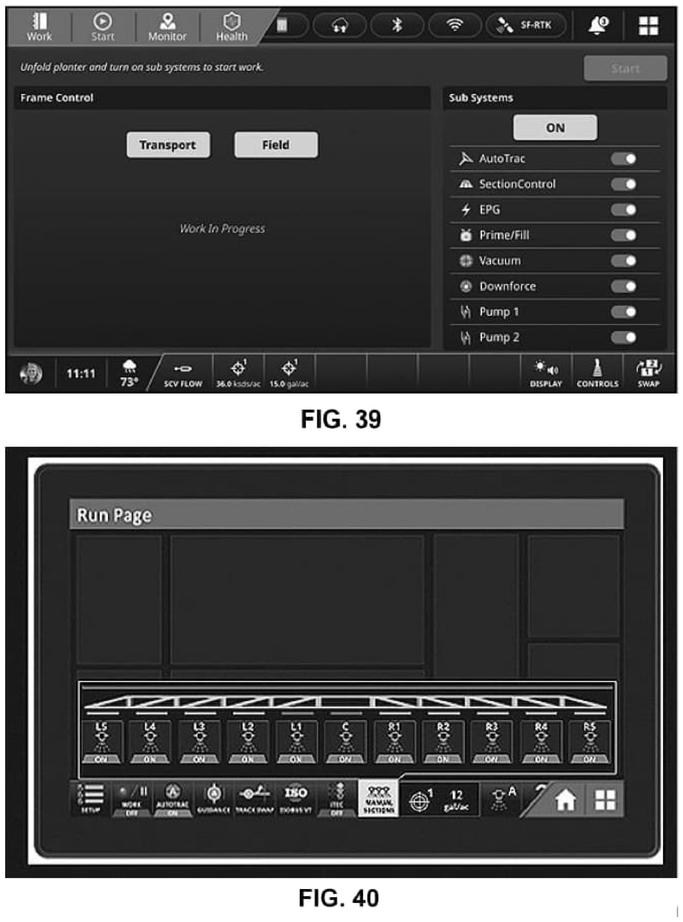

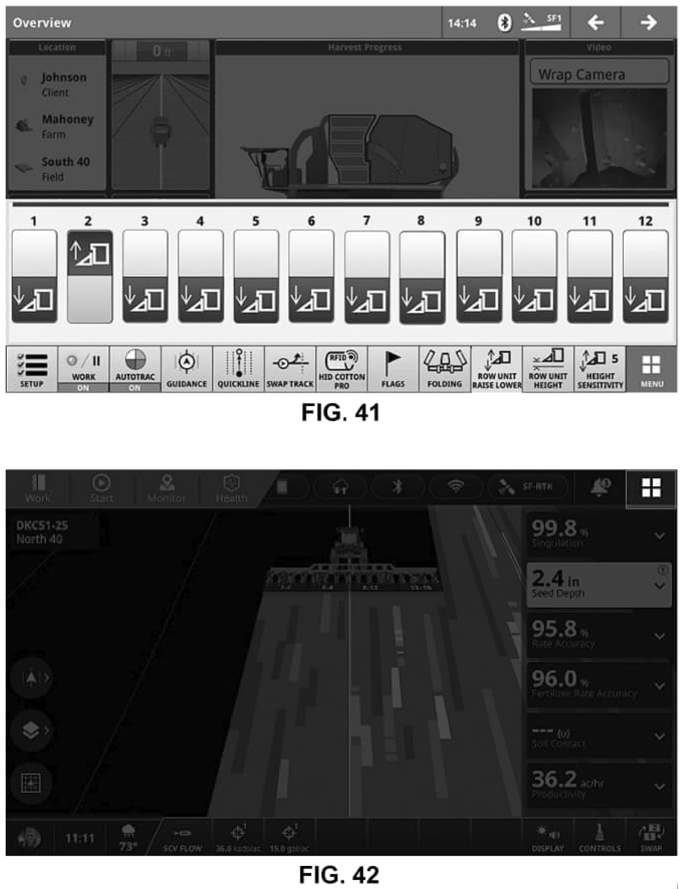

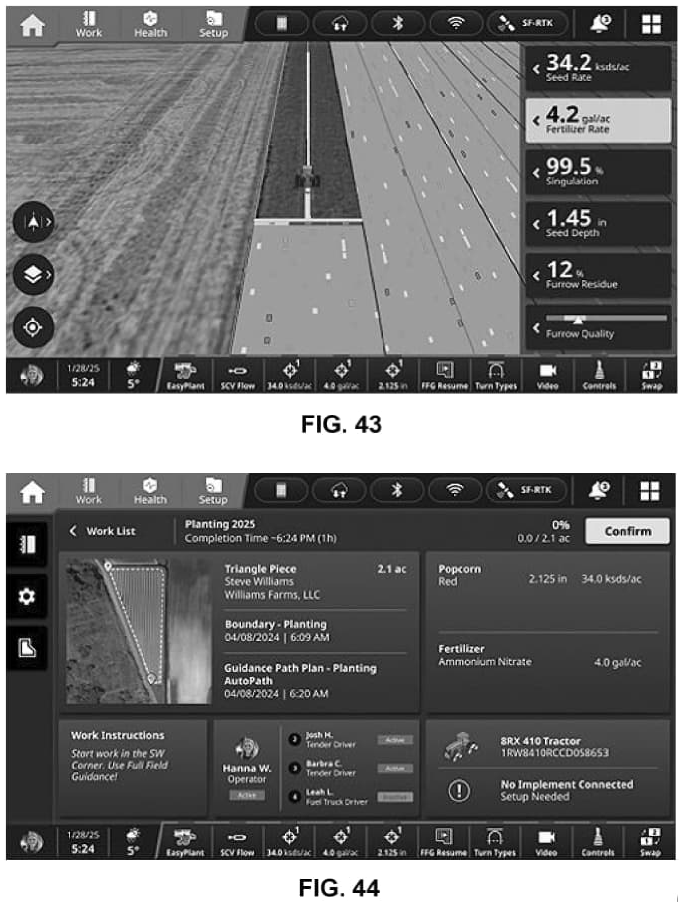

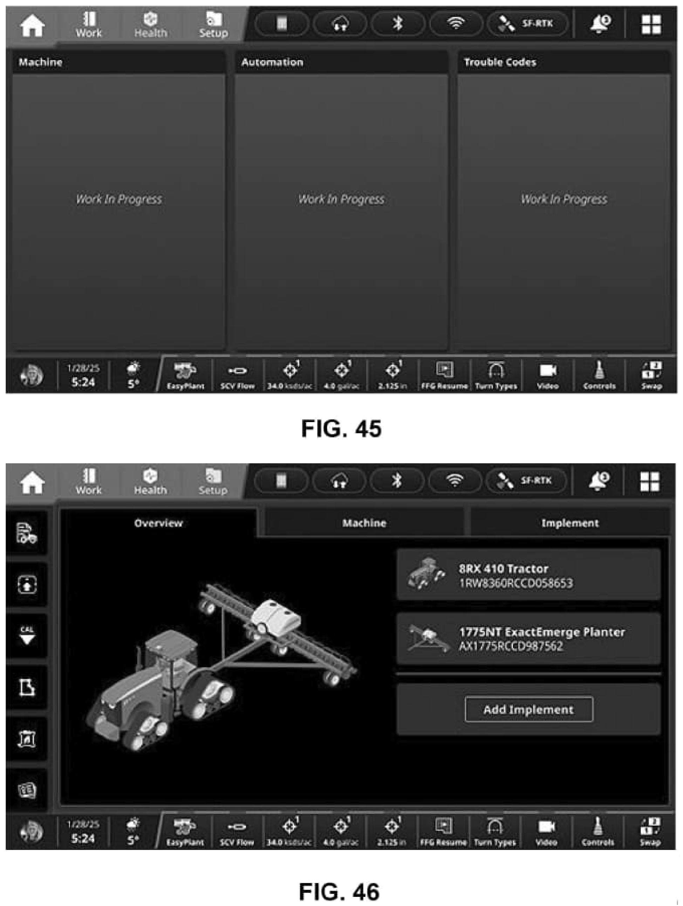

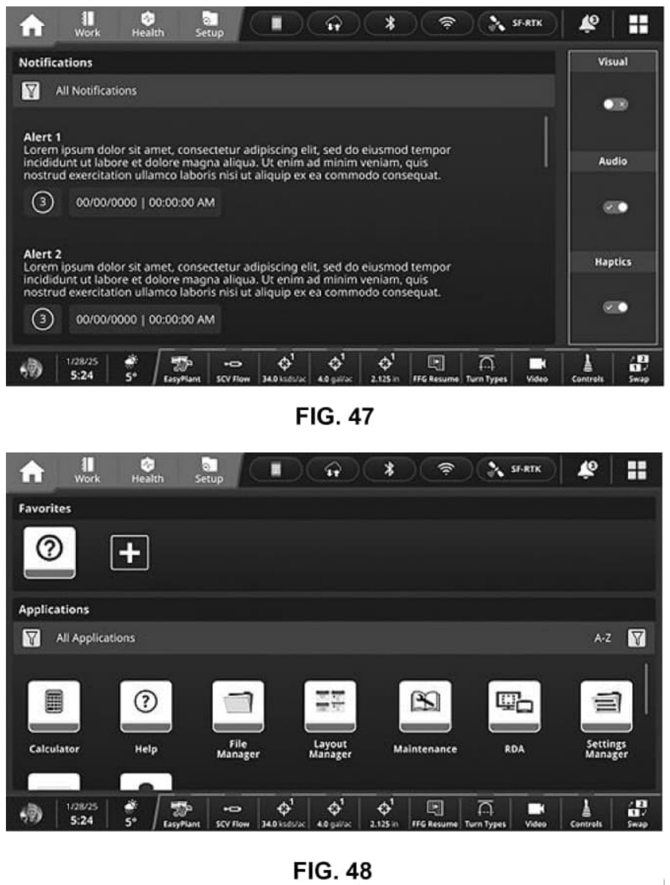

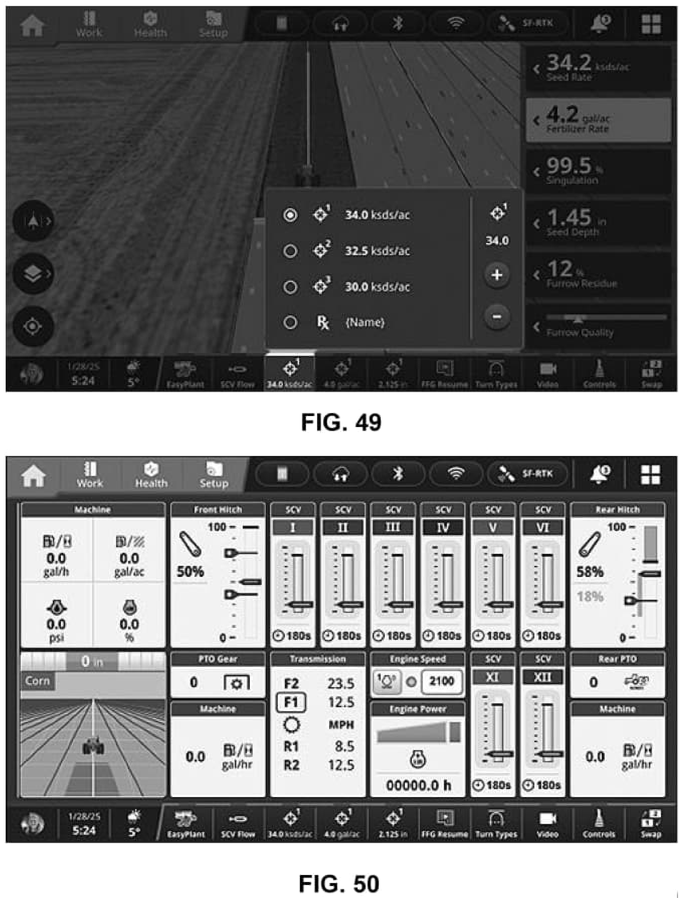

Example user interfaces developed by the user interface circuitry 200 are shown in FIGS. 3-21 and 25-50. The example user interfaces shown in FIGS. 3-21 and 25-50 include multilayered user interfaces for in-cab displays, which include different levels of information and functionality. Some of the example user interfaces provide context views of the current operational environment, such as field maps, equipment performance or work settings. User interfaces with context views offer high-level situational awareness. Some of the example user interfaces include pop-up interfaces that capture specific information or controls relevant to the task, and which allow quick access to targeted adjustments or metrics without disrupting the main workflow. Some of the example user interfaces include input panels that serve as interactive layers for entering data or making configuration changes, featuring elements like numeric keypads, dropdown menus for precise input, switch toggles, etc.

As disclosed herein, the user interface circuitry 200 evaluates and considers different parameters when determining what control configuration to present in the user interface. For example, some factors include the machine (or vehicle) type, the attachment or implement type, the time of year or season, the region or other geographical information, the types of technology installed in the vehicle, its subsystems, and/or implements, and/or the operator identity. For example, where the machine is a tractor, the implement is planter, the season is spring, the region is North America, and the installed technology includes electronic depth control, guidance, automated fertilizer application, automated planting rate, electronically actuated row cleaners, the user interface circuitry 200 may create and present a user interface with controls including selective controller valve (SCV) flow rate, target planting rate, target fertilizer rate, target depth, automated turning types, and an operator joystick button configured for planting. In another example, wherein the machine is a tractor, the implement is a grain cart, the season is autumn, the region is North America, and the installed technology includes machine synchronization and data sharing, the user interface circuitry 200 may create and present a user interface with controls including SCV flow rate, machine synchronization engagement, scale zeroing, increase load count, and the operator joystick button configured for grain carting.

FIG. 3 shows an example user interface 300. Different information is presented in different areas of the use interface 300 in a manner that is beneficial to the physical environment and intuitive for the operator. Information is presented in different areas to facilitate operator management of the vehicle 100. In some examples, the information is organized by phase of use and type of functionality. The user interface 300 of FIG. 3 can serve as a template for the other user interfaces disclosed herein. In addition, the user interface 300 of FIG. 3 may be an editable template. In some examples, the vehicle 100 receives the template, other user interfaces disclosed herein, and/or updates via a wireless communication. For example, the template and/or different information presented in the user interfaces may be downloaded from a cloud-based storage and/or a remote facility.

In some examples, the top left area 305 of the user interface 300 can be used to present major operation workflow functions. For example, elements associated with equipment and land set up, work planning, operation monitoring, health and diagnostics are collocated and anchored in the top left area 305. In some examples, the major operational workflow information is presented in the top right area 305 as a plurality of icons ordered based on frequency of use or ordered based on sequence of operation (i.e., the order in which an operator would access the different controls and functionality to operate the vehicle 100). This enables the operator to quickly select controls and operate the vehicle 100 without hunting through layers of menus and interfaces.

In some examples, notifications and status are collocated for the vehicle 100 and its subsystems in a top center area 310 of the user interface 300. The notifications and status show different subsystems of the vehicle 100 and/or its implements. The icons in the top center area 310 can dynamically change during operation of the vehicle 100 or its implements. In some examples, the icons in the top center area 310 change based on an operating state of the equipment.

In some examples, external environmental information that provides context for work planning and execution is collocated in the bottom left corner 315 of the user interface 300. The external environmental information provides context for work planning and execution. In some examples, the left corner 315 may show operator identification.

In some examples, machine and technology performance adjustment functionality is collocated along the bottom area 320 of the user interface 300. The machine and technology performance adjustment functionality include the real time digital controls of the vehicle 100 and its implements. The icons in the bottom area 320 can dynamically change during operation of the vehicle 100 or its implements. In some examples, the icons in the bottom area 320 change based on an operating state of the equipment. In some examples, a task bar is presented in the bottom area 320 that includes icons organized by one or more of frequency of use of a function (both for a typical operation and/or for an operator's personal use), whether the function is a base function or an optional technology, the product function, and/or personal preference of an operator.

In some examples, infrequently used functionality is presented in a top right corner 325 of the user interface 300. In some examples, the infrequently used functionality is nested in a menu. A menu of nested items uses less area of the user interface 300. In some examples, the area for infrequently used functionality is positioned adjacent to a support frame for the control panel 105. The support frame may be used by the operator for stability during operation of the vehicle 100. For example, the operator may brace a hand on the frame based on pitch, yaw, and/or roll of the vehicle. In some examples, a center 330 of the user interface 300 is used to present runtime information, pop-ups and overlays for additional functionality depending on what icons the operator selects, and input panels, as detailed below.

The placement of the different functionality in the different areas 305, 310, 315, 320, 325 of the user interface 300 is an example layout. In other examples, the different areas 305, 310, 315, 320, 325 can be used to present other information. In order words, the placement of the icons representing different functionality can be arranged in alternative examples based on factors such as, for example, an operator preference, an implement type, a vehicle type, a cab layout, a work environment, and/or a work task.

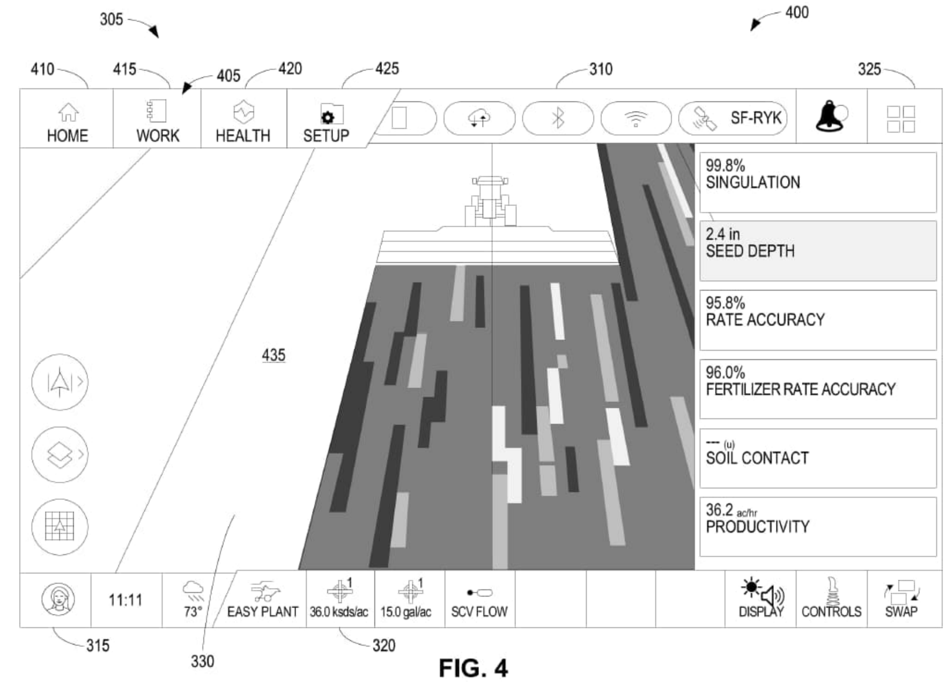

FIG. 4 illustrates an example user interface 400 using the template of FIG. 3. In the top left area 305, the user interface 400 includes an example navigational header 405 in which the major operational workflow is represented by icons that are arranged from left to right in an order of frequency of use. The navigational header 405 enables operators to seamlessly switch between different user interfaces. Contents of the navigational header 405 are organized into tabs, prioritizing high-frequency and essential information. Respective one of the tabs are represented by a design token that includes both an icon and a text label. In the example of FIG. 4, the icons include Home 410, Work 415, Health 420, and Setup 425. Home 410 represents information and settings associated with equipment and land set up. Work 415 represents information and settings associated with work planning, initiating subsystems, and operational monitoring. Health 420 represents information and settings associated with diagnostic operations. Setup 425 represents information and settings associated with seasonal activities. Different icons can flash, change colors, change brightness, and/or change contrast to indicate which an operator has selected.

The interface 400 also shows the runtime information in the center area 330. In the example of FIG. 4, the vehicle 100 and implements are a planter. The runtime information shows an avatar 430 of the vehicle 100 in a field 435 machine and technology performance adjustment functionality in the bottom area 320, which includes runtime monitoring and logistics. Data related to current state operation of the vehicle 100 is shown (e.g., singulation, seed depth, rate of accuracy, fertilizer rate of accuracy, soil contact, and productivity). The data that is presented is customizable based on operator preference, environment, type of task, etc. The runtime experience contextually updates based on work plans, equipment configuration, and/or operator identification. The information allows the operator to make informed adjustments to equipment and technology to support the work objectives.

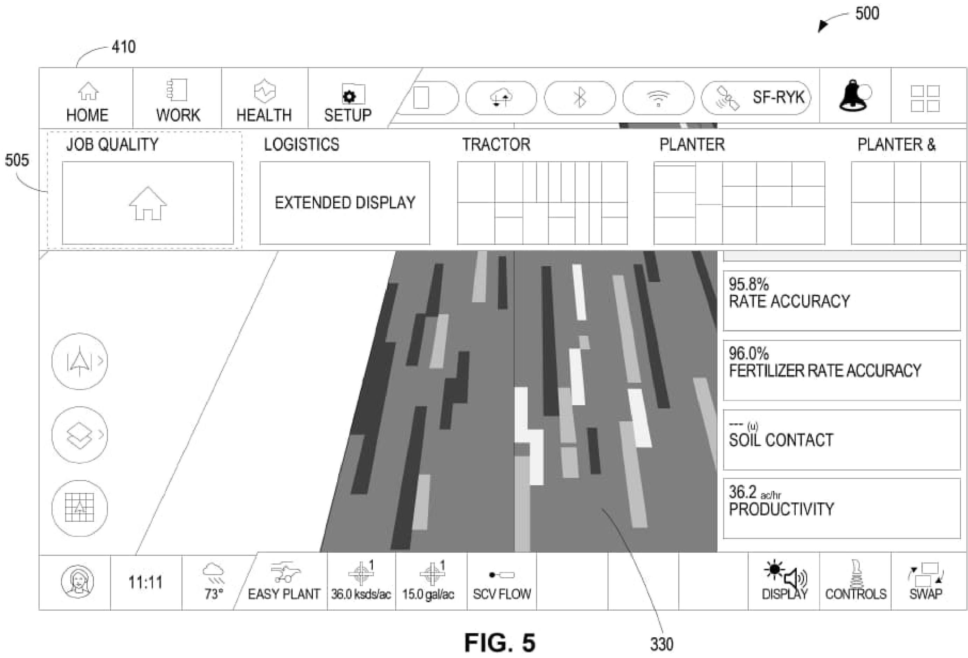

FIG. 5 shows an example user interface 500 when the operator selects the icon Home 410 in the user interface 400 of FIG. 4. An example ribbon 505 appears as an overlay on the runtime presentation in the center area 330. The ribbon 505 includes short cuts to additional information and controls. In the example user interface 500, the ribbon 505 includes logistics, details about the tractor (the vehicle 100), details about the planter (the implement), details about planter and fertilizing, etc. In some examples, the ribbon 505 scrolls to introduce additional subsystems, controls, and/or other information. The categories selected for the ribbon 505 and the order in which categories are presented in the ribbon 505 are customizable. The categories can be selected and/or arranged based on factors such as, for example, an operator preference, an implement type, a vehicle type, a cab layout, a work environment, and/or a work task. In some examples, the information and settings presented in the ribbon 505 are determined by a pre-configured or intelligent control system that dynamically identifies the implement connected to the machine and determines optimum settings. In some examples, the information and settings are based on a work plan created remotely (e.g., via an operations center, a web-based operation management tool, etc.) and synced to the vehicle 100. In some examples, the information and settings are based on a predefined configurations that identify the implement that is attached to the vehicle 100. In some examples, the information and settings are based on personalization that is saved in an operator profile. The ribbon 505 is an overlay on the persistent runtime screen, which allows the operator to maintain awareness of the current status of the vehicle 100 and task. The runtime screen is updated based on the operating state of the equipment while the additional information is presented over the runtime screen in the ribbon 505.

The operator can select one of the categories in the ribbon 505 to quickly obtain relevant information pertaining to that category. For example, if the operator selected the "Tractor" category from the ribbon 505, the operator would be able to access information and settings defined in a profile associated with the operator, machine, implement, field, work type, environmental conditions and/or any combination of these. The operator can exit back to the runtime screen by tapping the center area 330, for example. In other examples, the operator can close the ribbon 505 by selecting an icon in the upper left area 305. This compilation of information allows the operator to readily obtain further information while monitoring operational status of the vehicle 100 without requiring dedicated monitors for different functions or subsystems of the vehicle 500.

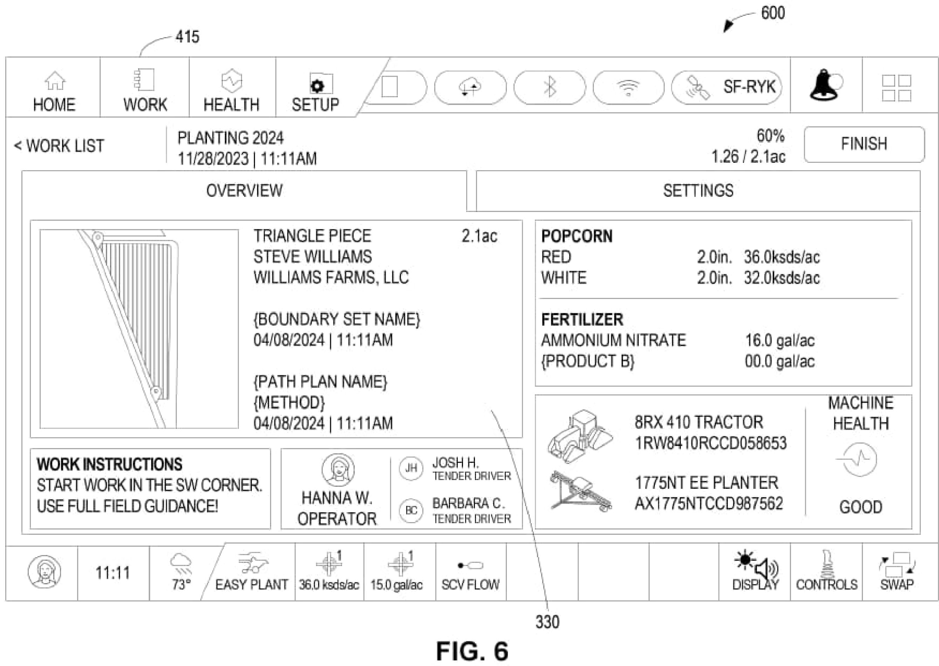

FIG. 6 shows an example user interface 600 in which the icon Work 415 is selected. In some examples, the user interface 600 includes pre-planned editable work and tools that can be used to create new work plans. The center area 300 of the user interface 600 provides current equipment and technology settings and an overview of the job for the next field. The user interface 600 provides details of multiple subsystems in a single visual display.

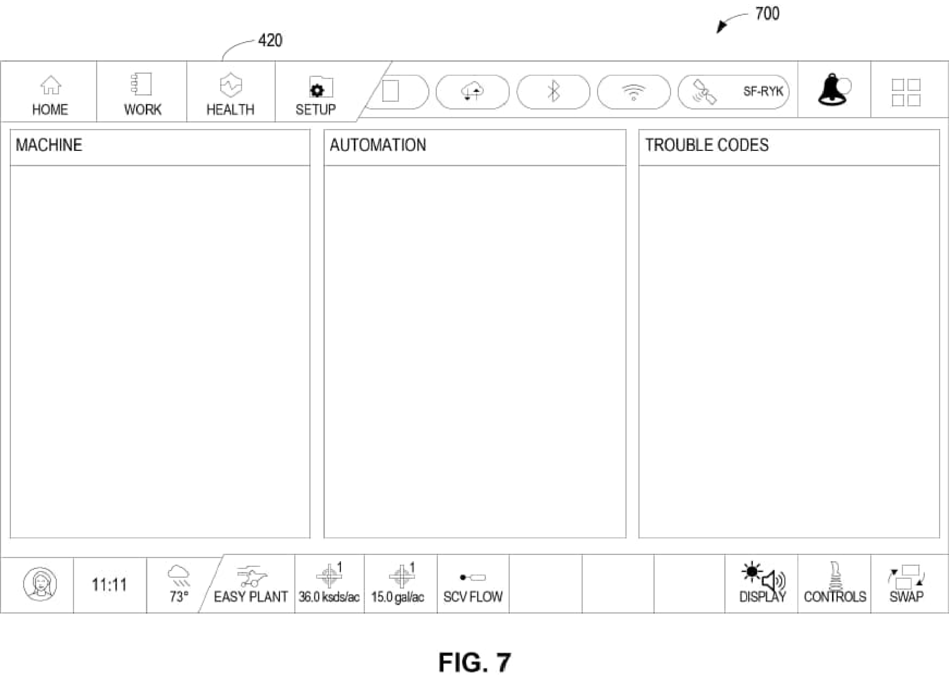

FIG. 7 shows an example user interface 700 in which the icon Health 420 is selected. Information related to the overall state and performance of the vehicle 100 and any implements and subsystems is provided. The information incorporated diagnostic and troubleshooting tools. The health and diagnostic information enables the operator to identify and solve issues to maintain stability, reliability, and efficiency in operation of the vehicle 100 and any implements and subsystems. Information and settings presented under the icon Health 420 can include one or more of vehicle and/or implement system statuses, automation system statuses, diagnostic trouble codes, Al generated alerts, other alerts and/or notifications, and/or event log(s).

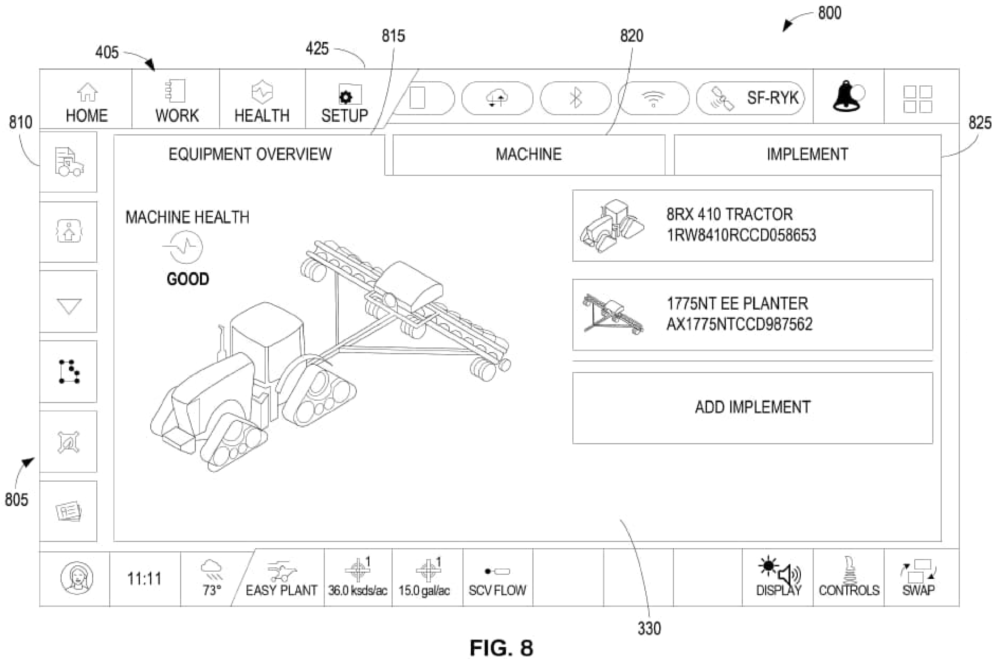

FIG. 8 shows an example user interface 800 in which the icon Setup 425 is selected. The information provided with the icon Setup 425 includes overview of the equipment and details of the machine (e.g., the vehicle 100) and any implements. The operator can confirm settings of the vehicle 100, implements, and any subsystems. Calibrations, controls, task tracking, guidance precision, land or environment tracking, products and license information, and seasonal settings are provided.

In addition to the navigational header 405 providing options for major operational workflow, some user interfaces also include secondary navigation rails. For example, the user interface 800 includes a secondary navigation rail 805. The secondary navigation rail 805 is represented by a row of icons along the left side of the user interface 800. In the example user interface 800 of Fig. 8, the secondary navigation rail 805 is in a closed state. In the illustrated example, a first icon 810 is selected in the secondary navigation rail 805. Secondary tabs to provide detailed information related to the subject matter associated with the first icon 810 is displayed horizontally in the example user interface 800. In this example, the secondary tabs include Equipment Overview 815, Machine 820, and Implement 825. The secondary tabs 815, 820, 825 also are selectable. In the example user interface 800, the operator selected the secondary tab Equipment Overview 815. Details about equipment is shown in the center area 330. In this example, the overview details include the type of vehicle 100 (e.g., a tractor), the type of implement (e.g., a planter), an option to add an implement, and that there are no diagnostic issues (i.e., the machine is in good health).

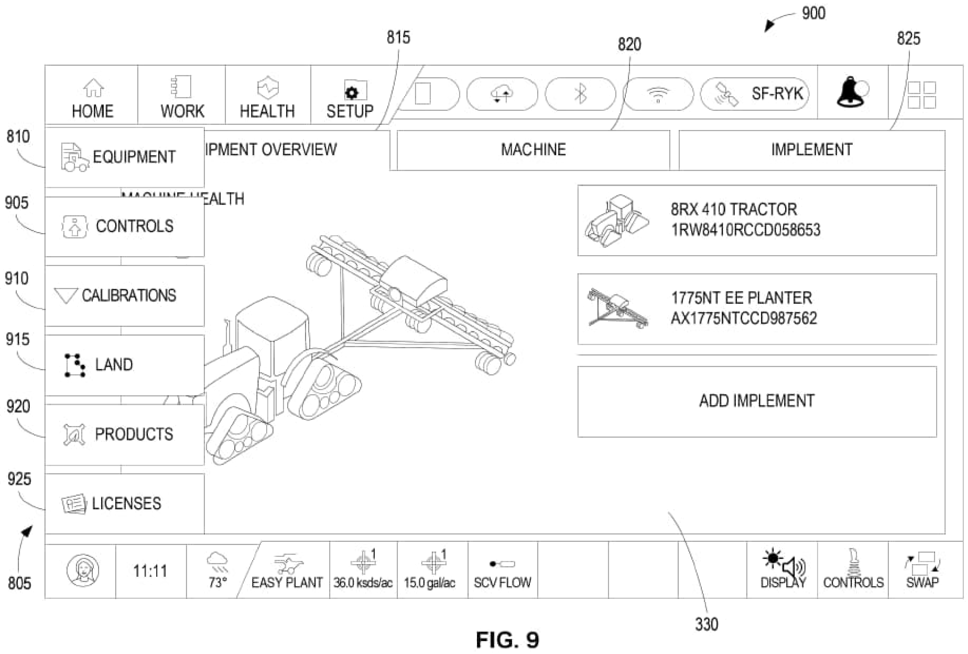

The secondary navigation rail 805 can be opened by selecting one of the icons of the secondary navigation rail 805. For example, the operator can tap an icon, double tap an icon, swipe on the secondary navigation rail 805 and/or make another movement and/or contact relative to the screen to prompt the secondary navigation rail 805 to open. FIG. 9 shows an example user interface 900 in which the secondary navigation rail 805 is open. As shown in FIG. 9, the first icon 810 is related to the equipment. The secondary navigation rail 805 includes a plurality of additional icons representing additional information such as, for example, Controls 905, Calibrations 910, Land 915, Products 920, and Licenses 925. The secondary navigation rail 805 partially overlaps the central area 330 when the secondary navigation rail is in the open state. The secondary navigation rail 805 can be closed by swiping it closed, tapping the center area 330, and/or selecting one of the secondary tabs 815, 820, 825.

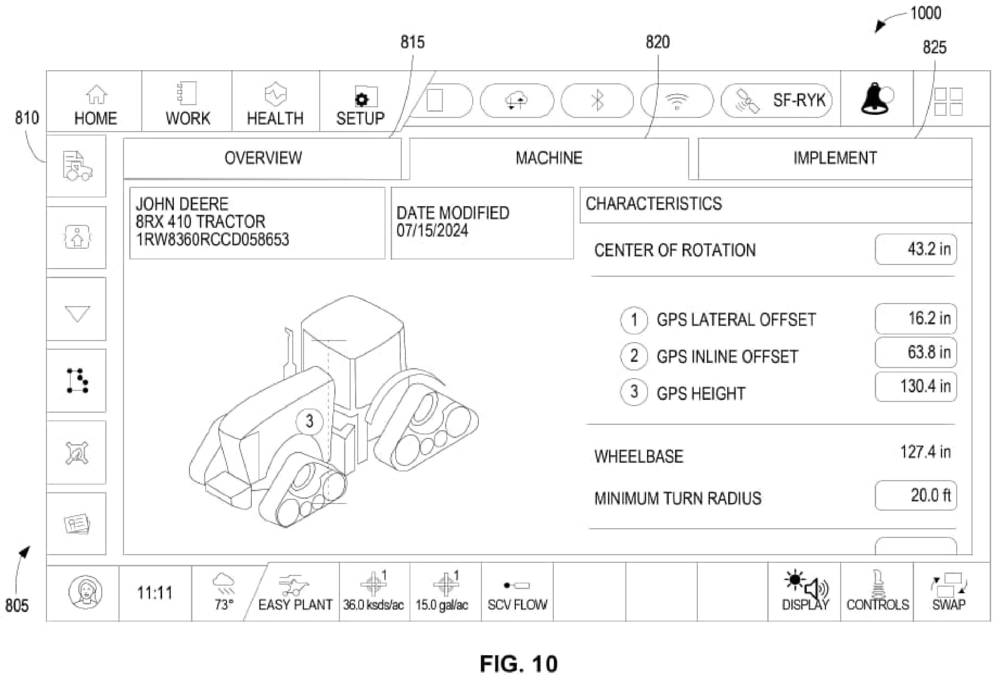

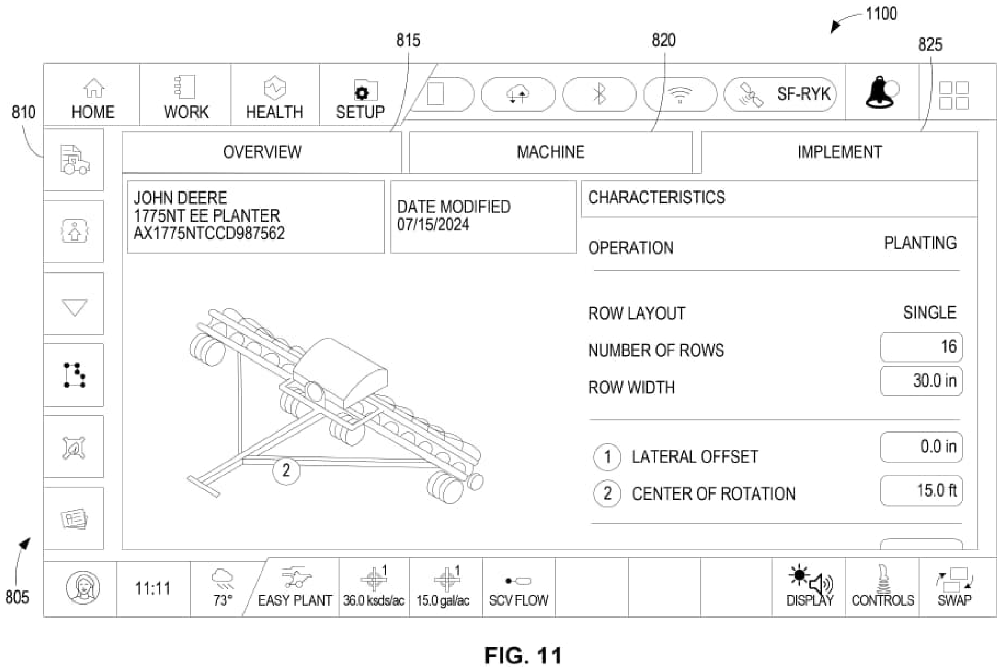

FIG. 10 illustrates an example user interface 1000 in which the secondary tab 820 related to details of the vehicle 100 (i.e., the machine) are provided. FIG. 11 illustrates an example user interface 1100 in which the secondary tab 825 related to details of the implement are provided.

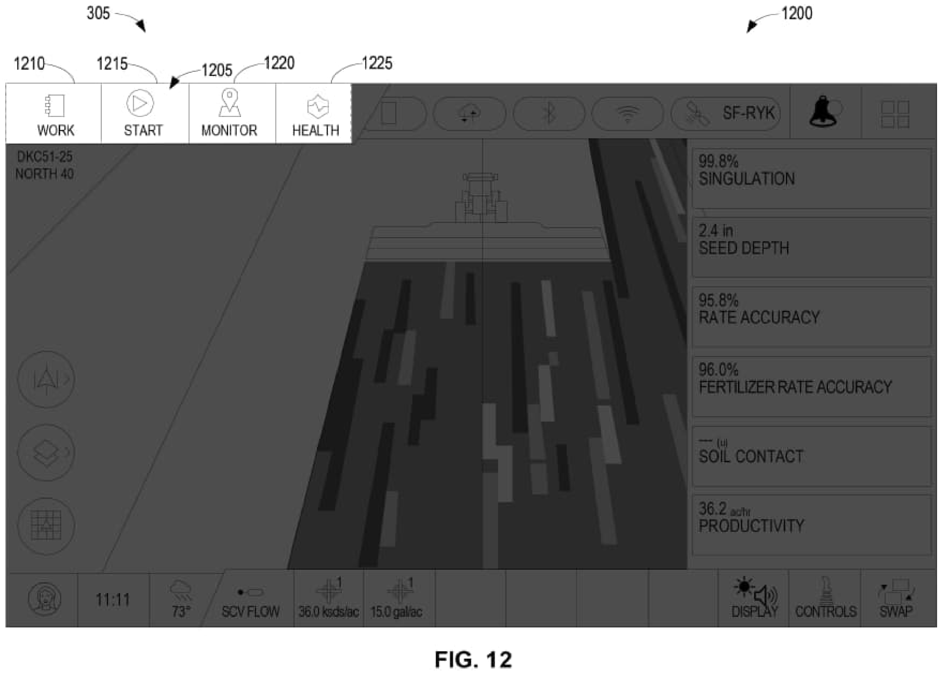

FIG. 12 illustrates an example user interface 1200 using the template of FIG. 3. In the top left area 305, the user interface 1200 includes an example navigational header 1205 in which the major operational workflow is represented by icons that are arranged from left to right in an order representing the sequence of use (compared to the user interface 400 of FIG. 4 in which the icons were arranged based on frequency of use). The navigational header 1205 enables operators to seamlessly switch between different user interfaces. Contents of the navigational header 1205 are organized into tabs, prioritizing high-frequency and essential information. Respective one of the tabs are represented by a design token that includes both an icon and a text label. In the example of FIG. 12, the icons include Home 1210, Work 1215, Health 1220, Setup 1225. Details related to the information provided with the subject matter represented by these icons is disclosed above.

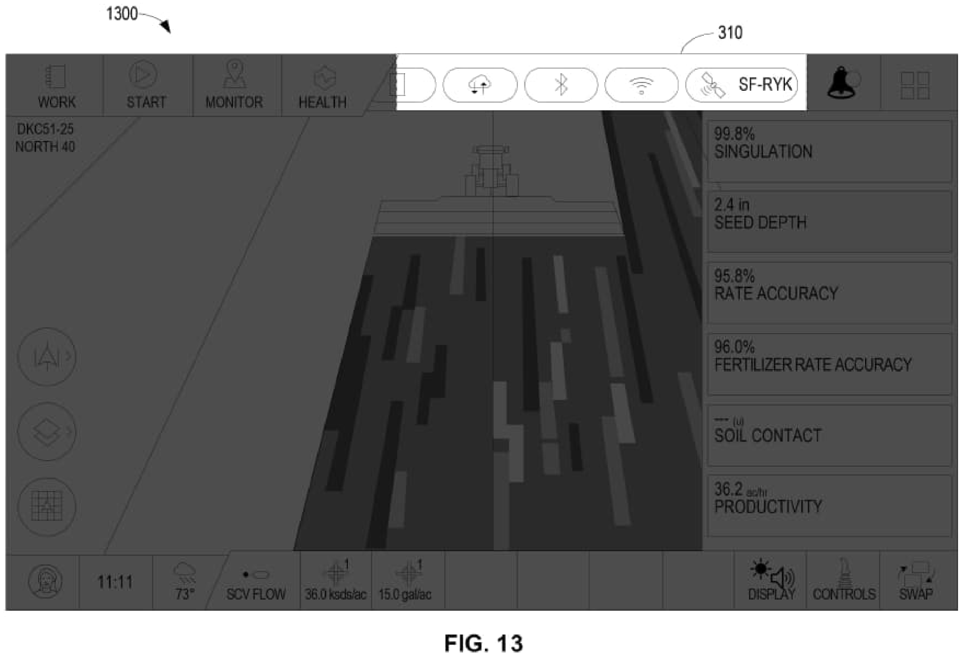

FIG. 13 shows an example user interface 1300. The user interface 1300 shows example icons in the top center area 310 representative of notification and status information for the vehicle 100 and its subsystems.

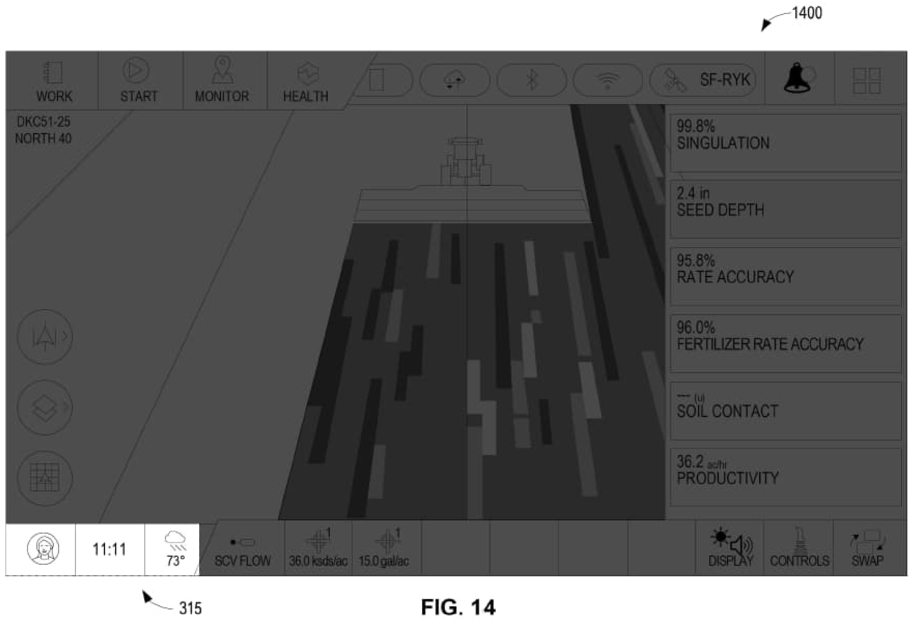

FIG. 14 shows an example user interface 1400. The user interface 1400 shows example icons in the bottom left corner 315 representative of external environmental information and operator identity.

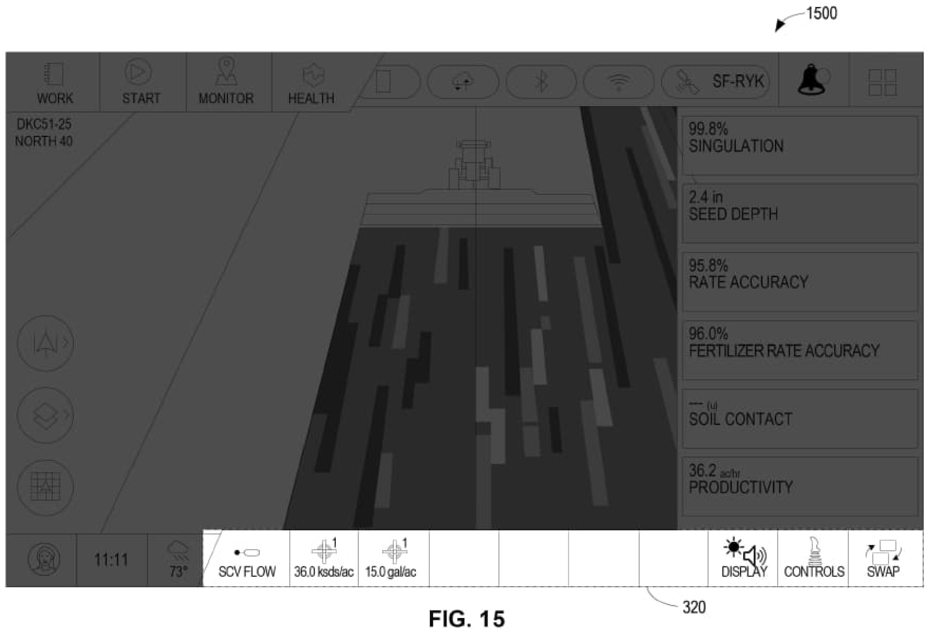

FIG. 15 shows an example user interface 1500. The user interface 1500 shows example icons representative of machine and technology performance adjustment functionality along the bottom area 320 of the user interface 1500. The machine and technology performance adjustment functionality include the real time digital controls of the vehicle 100 and its implements.

The icons in the bottom area 320 for real time digital control of the vehicle 100, its subsystems, and/or the implement(s) is populated via an application programming interface (API) and configured using a software development kit (SDK). The different icons in the bottom area 320 are contextually populated by selection of sub-systems that are relevant to the task. The basis for the contextual selection includes, for example, the type of work, the type of equipment, equipment configuration, time of year, prior operator preferences and/or setup choices, etc. The icons can be selected to provide status or value of different controls of the vehicle 100, its subsystems, and/or the implement(s).

The information provided can update and change as the work progresses. In some examples, the icons change to offer different information and/or information related to different subsystems as the work progresses. Thus, the icons to control the equipment can automatically change during operation and based on operating states and/or functionality of the vehicle 100, its subsystems, and/or the implement(s). Automatically changing the controls that are offered to the operator enables the operator to effectively and efficiently control the vehicle 100, its subsystems, and/or the implement(s) without needing to exit an application and navigate through one or more menu layers and/or one or more additional applications.

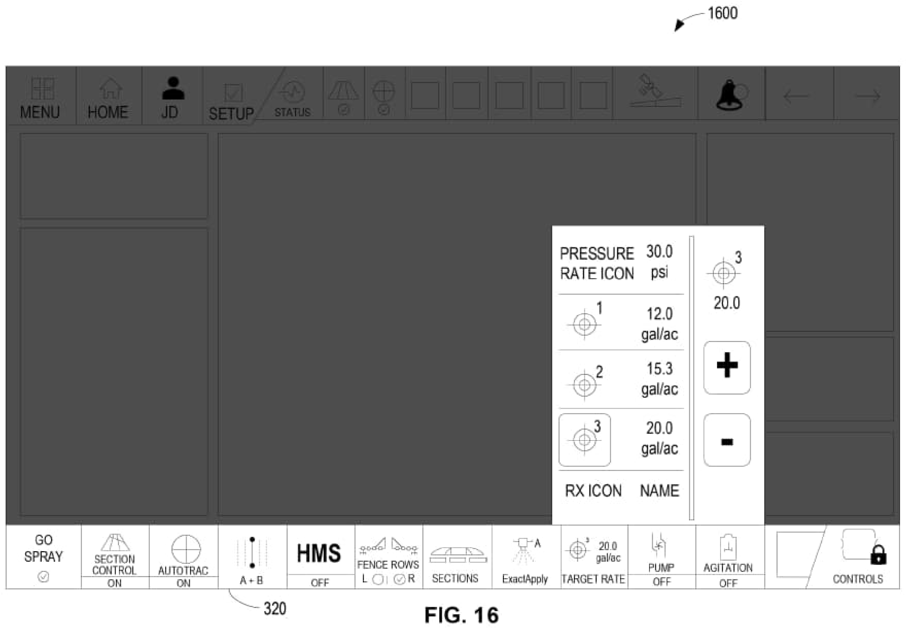

FIG. 16 shows an example user interface 1600 in which a control is selected from the bottom area 320. The control, in this example, is for selecting a tuning a parameter. The controls in the bottom area 320 show that multiple sources are compiled into one area. Ther operator does not need to acuate separate physical switches or open different dedicated applications to adjust the settings. The icons enable the operator to input an instruction via one or more of multi-option selection, value tuning, or binary state selection. In the example of FIG. 16, the parameter shown for adjustment is pressure. The operator can enter pressure adjustments value tuning the pressure in this example.

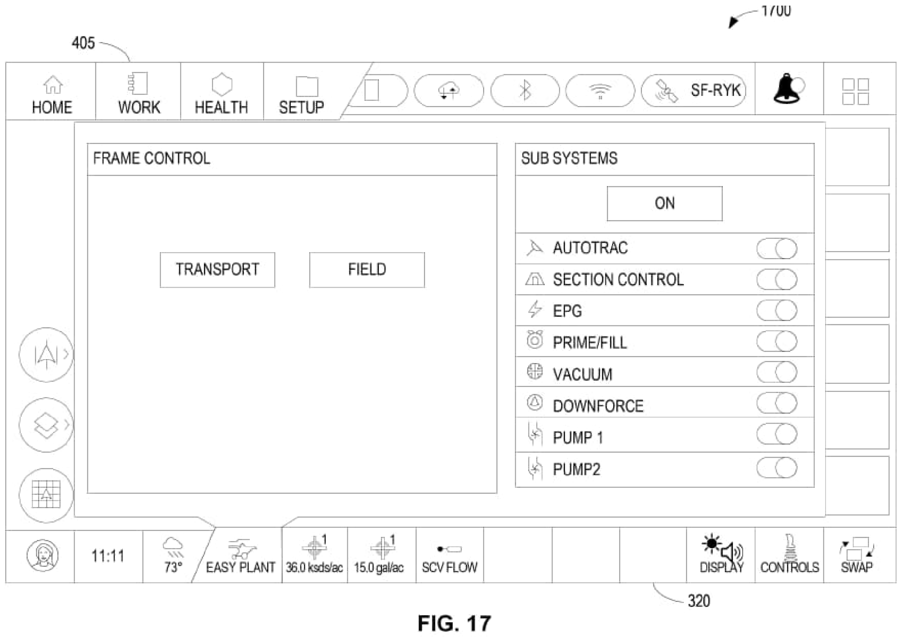

FIG. 17 shows an example user interface 1700. in which a control is selected from the bottom area 320. The control, in this example, is for selecting operating states of subsystems. In this example, the operating states are binary. The binary state selection is on/off in this example. The illustrated subsystems are for an example planting task. The operator can turn a subsystem on or off by toggling the button associated with the subsystem. In the example user interface 1700, the subsystems are provided in a list form or list view. The subsystems presented are selected based on the task and can dynamically change during progression of the task. The user interface 1700 shows the controls in the bottom area 320 selected from a screen organized with the major operation workflow functions arranged in the navigational header 405 in accordance with an order of frequency of use.

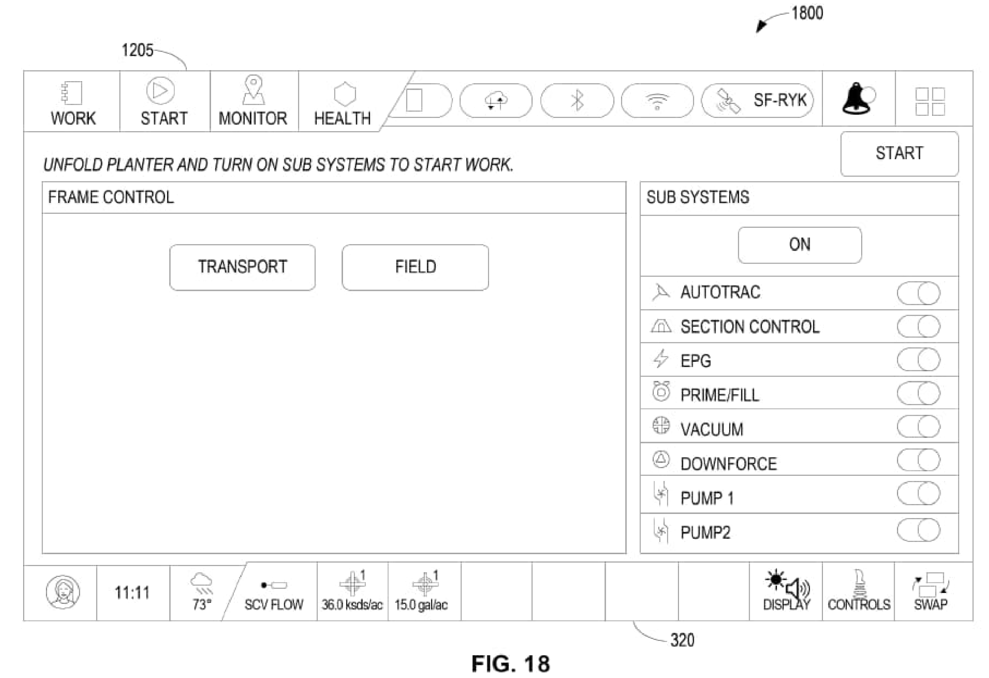

FIG. 18 shows an example user interface 1800 in which a control is selected from the bottom area 320. The user interface 1800 is similar to the user interface 1700. However, the user interface 1800 shows the controls in the bottom area 320 selected from a screen organized with the major operation workflow functions arranged in the navigational header 1205 accordance with an order for a sequence of use. The user interface 1700 and the user interface 1800 show icons related to "transport" and "field." These modes use predefined or intelligent configurations that adjust one or more settings to optimize behavior and performance of the vehicle 100 and/or the implement for different operating environments (e.g., road transport or in a field). Operator selection of transport or field commands state changes for the vehicle 100 and/or the implement. Example state changes include component position, lighting configuration, ladder position, and/or speed limits.

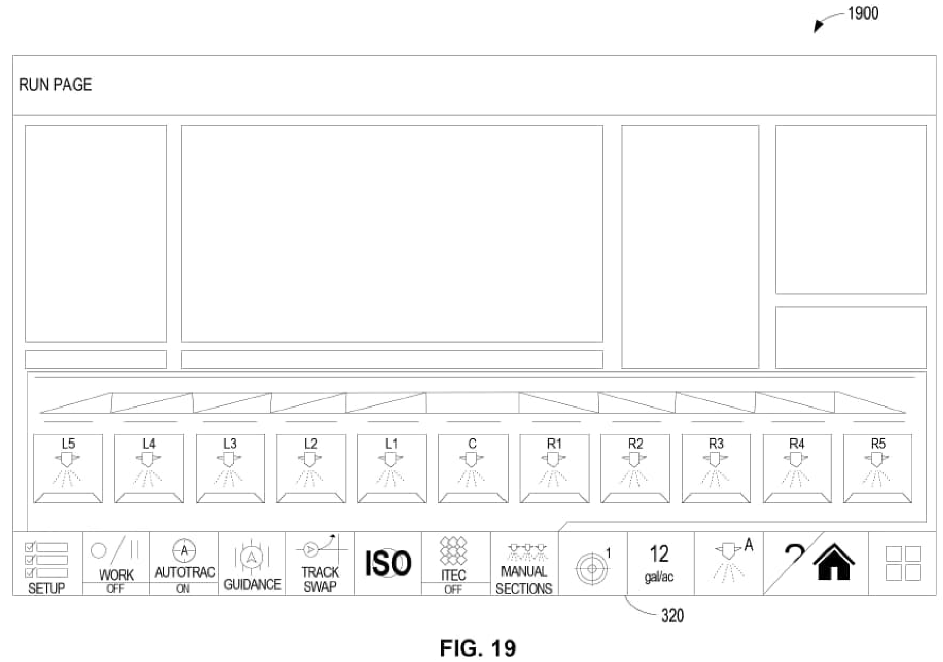

FIG. 19 shows an example user interface 1900 in which a control is selected from the bottom area 320. Similar to the user interface 1700 of FIG. 17 and the user interface 1800 if FIG. 18, the user interface 1900 of FIG. 19 enables the operator to control multiple subsystems. The controls in the user interface 1900 operate similar to those described in connection with other user interfaces. However, in the user interface 1900 of FIG. 19, the subsystems and related controls are presented in a graphical format or graphical view. In some examples, controls may be represented by both list and graphical views.

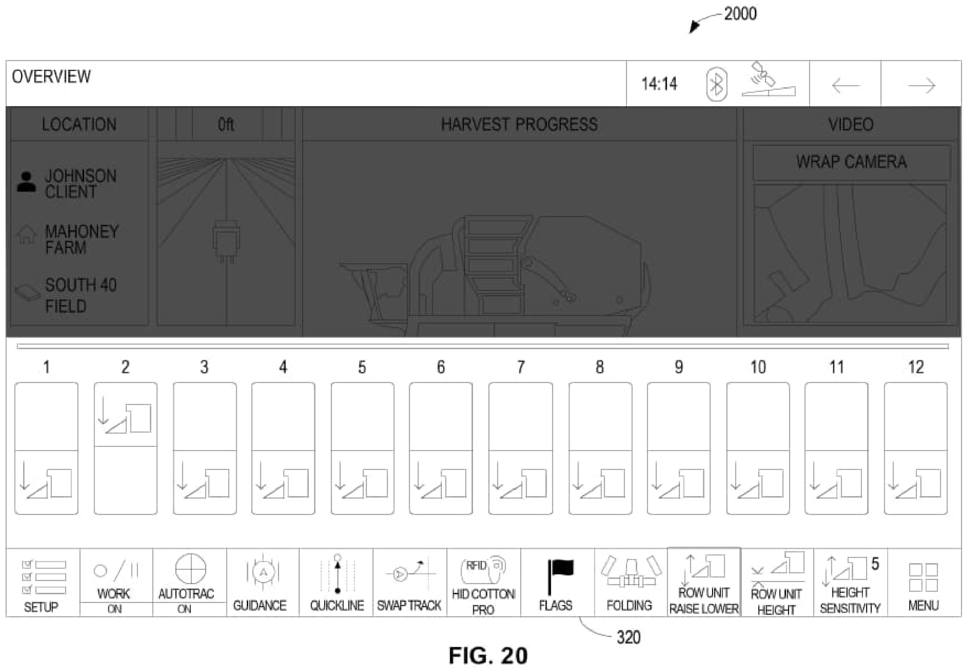

FIG. 20 shows an example user interface 2000 in which a control is selected from the bottom area 320. Similar to the user interface 1700 of FIG. 17, the user interface 1800 if FIG. 18, and the user interface 1900 of FIG. 19, the user interface 2000 of Fig. 20 enables the operator to control multiple subsystems. The controls in the user interface 1900 operate similar to those described in connection with other user interfaces. In FIG. 20, the controls enable multi-option binary state selection. In the example of FIG. 20, the implement is a cotton-picking machine. Different rows of the cotton-picking machine can be raised or lowered depending on operator selection. For example, an operator may raise a row to avoid a rock or other obstacle. The user interface 2000 of FIG. 20 shows that the second row is raised while the other rows of the cotton-picking machine are lowered. In some example, the vehicle 100, its subsystems, and/or the implements may have controls that have discrete adjustments rather than a binary state of on/off, up/down, etc.

The example controls shown in the user interfaces 1700, 1800, 1900, and 2000 are tools that enable centralized control of multiple subsystems and implements. The single control screen enables the operator to activate, deactivate, and/or otherwise adjust working systems. This control further enables the operator to switch quickly and easily between transport and word modes. Thus, in some examples (i.e., user interface 1700 and user interface 1800), the transport and work control (i.e., "field) are collocated.

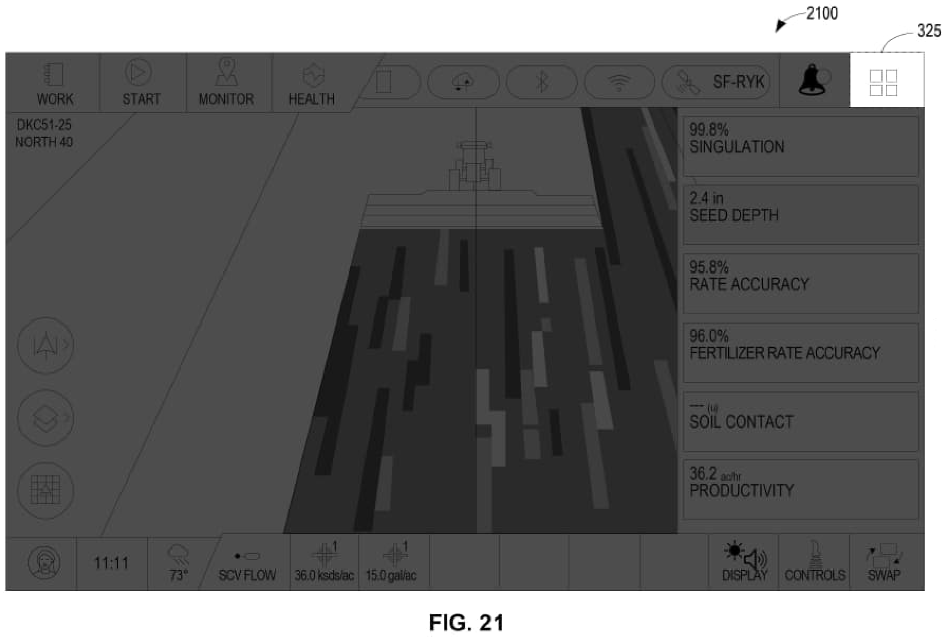

FIG. 21 shows an example user interface 2100. The user interface 2100 shows an example icon in a top right corner 325 indicative of a nested menu. The menu is used to access infrequently used functionality.

In some examples, the user interface circuitry 200 is instantiated by programmable circuitry executing user interface instructions and/or configured to perform operations such as those represented by the flowchart(s) of FIG. 22.

While an example manner of implementing the user interface circuitry 200 of FIG. 1 is illustrated in FIG. 2, one or more of the elements, processes, and/or devices illustrated in FIG. 2 may be combined, divided, re-arranged, omitted, eliminated, and/or implemented in any other way. Further, the example interface circuitry 205, the example control operation identification circuitry 210, the example operator identification circuitry 215, the status circuitry 220, and/or, more generally, the example user interface circuitry 200 of FIG. 2, may be implemented by hardware alone or by hardware in combination with software and/or firmware. Thus, for example, any of the example interface circuitry 205, the example control operation identification circuitry 210, the example operator identification circuitry 215, the status circuitry 220, and/or, more generally, the example user interface circuitry 200, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example user interface circuitry 200 of FIG. 2 may include one or more elements, processes, and/or devices in addition to, or instead of, those illustrated in FIG. 2, and/or may include more than one of any or all of the illustrated elements, processes and devices.

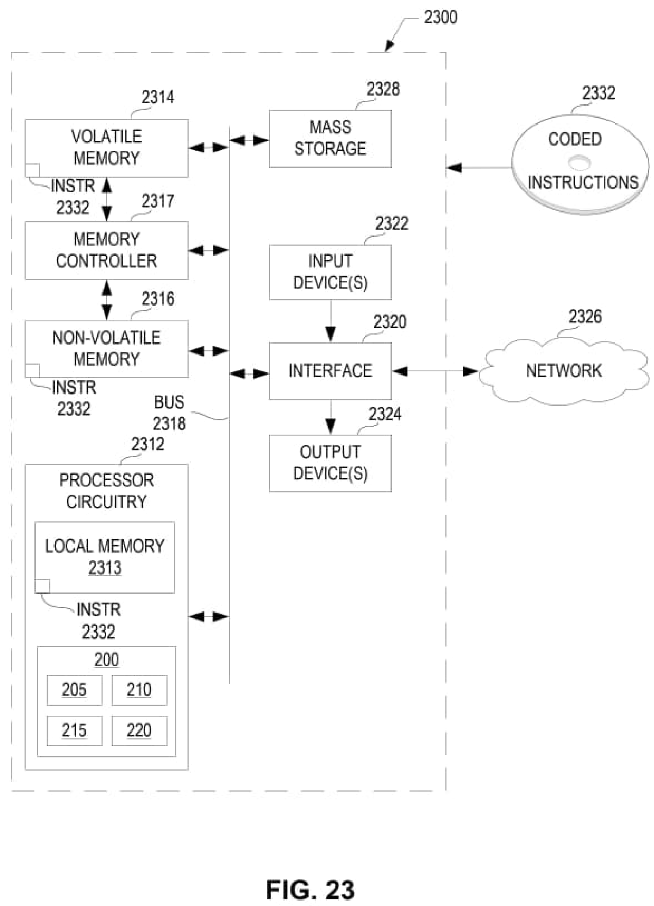

Flowchart(s) representative of example machine-readable instructions, which may be executed by programmable circuitry to implement and/or instantiate the user interface circuitry 200 of FIG. 2 and/or representative of example operations which may be performed by programmable circuitry to implement and/or instantiate the user interface circuitry 200 of FIG. 2, are shown in FIG. 22. The machine-readable instructions may be one or more executable programs or portion(s) of one or more executable programs for execution by programmable circuitry such as the programmable circuitry 2312 shown in the example processor platform 2300 discussed below in connection with FIG. 23. In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIG. 22, many other methods of implementing the example user interface circuitry 200 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer readable and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 22 may be implemented using executable instructions (e.g., computer readable and/or machine-readable instructions) stored on one or more non-transitory computer readable and/or machine-readable media. As used herein, the terms non-transitory computer readable medium, non-transitory computer readable storage medium, non-transitory machine-readable medium, and/or non-transitory machine-readable storage medium are expressly defined to include any type of computer readable storage device and/or storage disk and to exclude propagating signals and to exclude transmission media. Examples of such non-transitory computer readable medium, non-transitory computer readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine-readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine-readable instructions, etc., and/or manufactured to execute computer-readable instructions, machine-readable instructions, etc.

FIG. 22 is a flowchart representative of example machine-readable instructions and/or example operations 2200 that may be executed, instantiated, and/or performed by programmable circuitry to organize presentation of control functionality a heavy equipment vehicle, its subsystems, and/or implements. The example machine-readable instructions and/or the example operations 2200 of FIG. 22 include the interface circuity 205 of the user interface circuitry 200 accessing parameters of the equipment (i.e., the vehicle 100, its subsystems, and/or implements) and parameters of the land (block 2205).

The control operation identification circuitry 210 identifies information and control operations of the equipment (block 2210). In other words, the control operation identification circuitry 210 identifies how the vehicle 100, its subsystems, and/or implements operate and can be controlled. The control operation identification circuitry 210 identifies a frequency of use of the information and control operations (block 2215). In some examples, the operator identification circuitry 215 determines the operator identity and the frequency of use of information control operations is determined based on the operator identity. In addition, the control operation identification circuitry 210 identifies an order of use of information and control operations (block 2220). In some examples, the order of use of the information and control operations is based on a specific task.

The user interface circuitry 200 determines presentation layout for icons representative of the information control operations (block 2225). The presentation layout is to determine the content and organization of the user interface presented on the control panel 105. The user interface circuitry 200 displays the icons in the determined layout on the user interface (block 2230). Example details of such user interfaces are disclosed herein.

The status circuitry 220 detects operator input and/or a change in an operating state of the equipment (block 2235). If and/or when the status circuitry 220 detects operator input and/or a change in an operating state of the equipment (block 2235: YES), the user interface circuitry 200 determines presentation layout for icons representative of the information and control operations (block 2225). In other words, operator input and/or state change of the equipment can dynamically cause changes in the user interfaces. If and/or when the status circuitry 220 does not detect operator input and/or a change in an operating state of the equipment (block 2235: NO), there may be no further change to the user interface, and the example process 200 ends.

FIG. 23 is a block diagram of an example programmable circuitry platform 2300 structured to execute and/or instantiate the example machine-readable instructions and/or the example operations of FIG. 22 to implement the user interface circuitry 200 of FIG. 2. The programmable circuitry platform 2300 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 2300 of the illustrated example includes programmable circuitry 2312. The programmable circuitry 2312 of the illustrated example is hardware. For example, the programmable circuitry 2312 can be implemented by one or more integrated circuits, logic circuits, FPGAs, microprocessors, CPUs, GPUs, DSPs, and/or microcontrollers from any desired family or manufacturer. The programmable circuitry 2312 may be implemented by one or more semiconductor based (e.g., silicon based) devices. In this example, the programmable circuitry 2312 implements the user interface circuitry 200, the interface circuitry 205, the control operation identification circuitry 210, the operator identification circuitry 215, and the status circuitry 220.

The programmable circuitry 2312 of the illustrated example includes a local memory 2313 (e.g., a cache, registers, etc.). The programmable circuitry 2312 of the illustrated example is in communication with main memory 2314, 2316, which includes a volatile memory 2314 and a non-volatile memory 2316, by a bus 2318. The volatile memory 2314 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 2316 may be implemented by flash memory and/or any other desired type of memory device. Access to the main memory 2314, 2316 of the illustrated example is controlled by a memory controller 2317. In some examples, the memory controller 2317 may be implemented by one or more integrated circuits, logic circuits, microcontrollers from any desired family or manufacturer, or any other type of circuitry to manage the flow of data going to and from the main memory 2314, 2316.

The programmable circuitry platform 2300 of the illustrated example also includes interface circuitry 2320. The interface circuitry 2320 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCle) interface.

In the illustrated example, one or more input devices 2322 are connected to the interface circuitry 2320. The input device(s) 2322 permit(s) a user (e.g., a human user, a machine user, etc.) to enter data and/or commands into the programmable circuitry 2312. The input device(s) 2322 can be implemented by, for example, an audio sensor, a microphone, a camera (still or video), a keyboard, a button, a mouse, a touchscreen, a trackpad, a trackball, an isopoint device, and/or a voice recognition system.

One or more output devices 2324 are also connected to the interface circuitry 2320 of the illustrated example. The output device(s) 2324 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 2320 of the illustrated example, thus, typically includes a graphics driver card, a graphics driver chip, and/or graphics processor circuitry such as a GPU.

The interface circuitry 2320 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 2326. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 2300 of the illustrated example also includes one or more mass storage discs or devices 2328 to store firmware, software, and/or data. Examples of such mass storage discs or devices 2328 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 2332, which may be implemented by the machine-readable instructions of FIG. 22, may be stored in the mass storage device 2328, in the volatile memory 2314, in the non-volatile memory 2316, and/or on at least one non-transitory computer readable storage medium such as a CD or DVD which may be removable.

A block diagram illustrating an example software distribution platform 2405 to distribute software such as the example machine-readable instructions 2332 of FIG. 23 to other hardware devices (e.g., hardware devices owned and/or operated by third parties from the owner and/or operator of the software distribution platform) is illustrated in FIG. 24. The example software distribution platform 2405 may be implemented by any computer server, data facility, cloud service, etc., capable of storing and transmitting software to other computing devices. The third parties may be customers of the entity owning and/or operating the software distribution platform 2405. For example, the entity that owns and/or operates the software distribution platform 2405 may be a developer, a seller, and/or a licensor of software such as the example machine-readable instructions 2332 of FIG. 23. The third parties may be consumers, users, retailers, OEMs, etc., who purchase and/or license the software for use and/or re-sale and/or sub-licensing. In the illustrated example, the software distribution platform 2405 includes one or more servers and one or more storage devices. The storage devices store the machine-readable instructions 2332, which may correspond to the example machine-readable instructions of FIG. 22, as described above. The one or more servers of the example software distribution platform 2405 are in communication with an example network 2410, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine-readable instructions 2332 from the software distribution platform 2405. For example, the software, which may correspond to the example machine-readable instructions of FIG. 22, may be downloaded to the example programmable circuitry platform 2300, which is to execute the machine-readable instructions 2332 to implement the user interface circuitry 200. In some examples, one or more servers of the software distribution platform 2405 periodically offer, transmit, and/or force updates to the software (e.g., the example machine-readable instructions 2332 of FIG. 23) to ensure improvements, patches, updates, etc., are distributed and applied to the software at the end user devices. Although referred to as software above, the distributed "software" could alternatively be firmware.

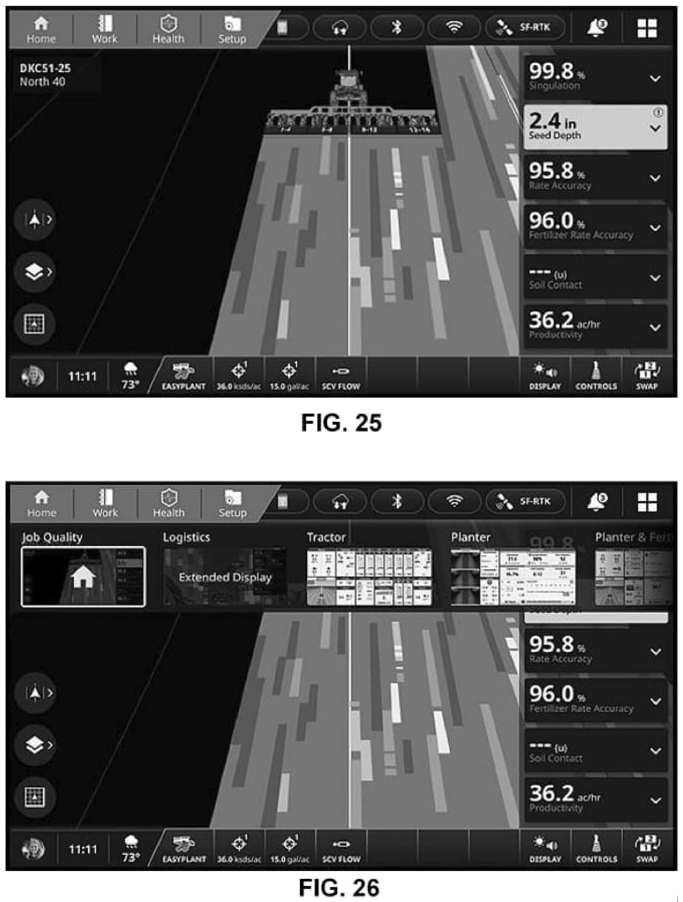

FIGS. 25-50 are additional example user interfaces generated by the user interface circuitry.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real-world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

Example control panels and user interfaces disclosed herein intelligently curate the selection and organization of content, controls, and other information for an operator of heavy equipment. Example control panels and user interfaces disclosed herein streamline the workflow, ensure efficiency and productivity, and enable seamless transitions between tasks.

From the foregoing, it will be appreciated that example systems, apparatus, articles of manufacture, and methods have been disclosed that enable operators of heavy equipment to control the equipment and effect changes in operating states of the equipment more quickly than in traditional machines. Disclosed systems, apparatus, articles of manufacture, and methods are accordingly directed to one or more improvement(s) in the operation of a machine such as a computer or other electronic and/or mechanical device.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus (100, 200) comprising:
interface circuitry (205);
machine-readable instructions (2200, 2332); and
processor circuitry (200, 210, 215, 220, 2300) to be programmed by the machine-readable instructions to:
identify functionality of a plurality of control operations of agricultural or construction equipment (100);
identify frequency of use of the plurality of control operations;
identify one or more sequences of use of the control operations;
present a plurality of icons simultaneously on a user interface (300, 400, 500, 600, 700, 800, 900, 1000, 1100, 1200, 1300, 1400, 1500, 1600, 1700, 1800, 1900, 2000, 2100) based on at least one of the frequency of use or the one or more sequences of use, respective icons indicative of the functionality of the control operation; and
cause a change in an operating parameter of the agricultural or construction equipment based on an operator selection of one of the plurality of icons.

2. The apparatus of claim 1, wherein the processor circuitry is to access an identity of the operator and present the plurality of icons based on the identity.

3. The apparatus of any of preceding claim, wherein the processor circuitry is to present the icons on an area of the user interface based on the frequency of use of the respective control operation.

4. The apparatus of any preceding claim, wherein the processor circuitry is to present the icon associated with an infrequently used control operation near a support frame for the user interface.

5. The apparatus of any preceding claim, wherein the control operations include two or more of setting up equipment, setting up environment, work planning, operational monitoring, or diagnostics.

6. The apparatus of any preceding claim, wherein the processor circuitry is to dynamically change the icons during operation of the equipment.

7. The apparatus of any preceding claim, wherein the icons enable the operator to input an instruction via one or more of multi-option selection, value tuning, or binary state selection.

8. The apparatus of any preceding claim, wherein the processor circuitry is to:
present a runtime screen on the user interface, the runtime screen to present an operating condition of the agricultural or construction equipment; and
present the plurality of icons in a single layer over at least a portion of the runtime screen.

9. The apparatus of any preceding claim, wherein the processor circuitry is to implement machine learning algorithms based on prior control of the agricultural or construction equipment to identify at least one of the frequency of use of the plurality of control operations or the one or more sequences of use of the control operations.

10. A method (2200) implemented using one or more processors (2300) and comprising:
identifying functionality of a plurality of control operations of agricultural or construction equipment (2210);
identifying frequency of use of the plurality of control operations (2215);
identifying one or more sequences of use of the control operations (2220); presenting a plurality of icons simultaneously on a user interface (300, 400, 500, 600, 700, 800, 900, 1000, 1100, 1200, 1300, 1400, 1500, 1600, 1700, 1800, 1900, 2000, 2100) based on at least one of the frequency of use or the one or more sequences of use, respective icons indicative of the functionality of the control operation (21225, 2230); and
causing a change in an operating parameter of the agricultural or construction equipment (100) based on an operator selection of one of the plurality of icons.

11. The method of claim 10, further including presenting the icons on an area of the user interface based on the frequency of use of the respective control operation.

12. The method of any of claims 10 or 11 further including dynamically changing the content of the user interface during operation of the equipment and based on an operating state of the equipment.

13. The method of claim any of claims 10-12, further including:
presenting a runtime screen on the user interface, the runtime screen to present an operating condition of the agricultural or construction equipment; and
presenting the plurality of icons in a single layer over at least a portion of the runtime screen.

14. The method of claim 13, further including updating the runtime screen while the plurality of icons are presented over the runtime screen.

15. Machine-readable storage including machine-readable instructions, when executed, to implement a method or realize an apparatus as claimed in any preceding claim.

## Amended claims

### Amended claims in accordance with Rule 137(2) EPC.

1. An apparatus (100, 200) comprising:
interface circuitry (205);
machine-readable instructions (2200, 2332); and
processor circuitry (200, 210, 215, 220, 2300) to be programmed by the machine-readable instructions to:
identify functionality of a plurality of control operations of agricultural or construction equipment (100);
identify frequency of use of the plurality of control operations;
identify one or more sequences of use of the control operations;
present a plurality of icons simultaneously on a user interface (300, 400, 500, 600, 700, 800, 900, 1000, 1100, 1200, 1300, 1400, 1500, 1600, 1700, 1800, 1900, 2000, 2100) based on at least one of the frequency of use or the one or more sequences of use, respective icons indicative of the functionality of the control operation; and
cause a change in an operating parameter of the agricultural or construction equipment based on an operator selection of one of the plurality of icons.

2. The apparatus of claim 1, wherein the processor circuitry is to access an identity of the operator and present the plurality of icons based on the identity.

3. The apparatus of any of preceding claim, wherein the processor circuitry is to present the icons on an area of the user interface based on the frequency of use of the respective control operation.

4. The apparatus of any preceding claim, wherein the processor circuitry is to present the icon associated with an infrequently used control operation near a support frame for the user interface.

5. The apparatus of any preceding claim, wherein the control operations include two or more of setting up equipment, setting up environment, work planning, operational monitoring, or diagnostics.

6. The apparatus of any preceding claim, wherein the processor circuitry is to dynamically change the icons during operation of the equipment.

7. The apparatus of any preceding claim, wherein the icons enable the operator to input an instruction via one or more of multi-option selection, value tuning, or binary state selection.

8. The apparatus of any preceding claim, wherein the processor circuitry is to:
present a runtime screen on the user interface, the runtime screen to present an operating condition of the agricultural or construction equipment; and
present the plurality of icons in a single layer over at least a portion of the runtime screen.

9. The apparatus of any preceding claim, wherein the processor circuitry is to implement machine learning algorithms based on prior control of the agricultural or construction equipment to identify at least one of the frequency of use of the plurality of control operations or the one or more sequences of use of the control operations.

10. A method (2200) implemented using one or more processors (2300) and comprising:
identifying functionality of a plurality of control operations of agricultural or construction equipment (2210);
identifying frequency of use of the plurality of control operations (2215);
identifying one or more sequences of use of the control operations (2220); presenting a plurality of icons simultaneously on a user interface (300, 400, 500, 600, 700, 800, 900, 1000, 1100, 1200, 1300, 1400, 1500, 1600, 1700, 1800, 1900, 2000, 2100) based on at least one of the frequency of use or the one or more sequences of use, respective icons indicative of the functionality of the control operation (21225, 2230); and
causing a change in an operating parameter of the agricultural or construction equipment (100) based on an operator selection of one of the plurality of icons.

11. The method of claim 10, further including presenting the icons on an area of the user interface based on the frequency of use of the respective control operation.

12. The method of any of claims 10 or 11 further including dynamically changing the content of the user interface during operation of the equipment and based on an operating state of the equipment.

13. The method of claim any of claims 10-12, further including:
presenting a runtime screen on the user interface, the runtime screen to present an operating condition of the agricultural or construction equipment; and
presenting the plurality of icons in a single layer over at least a portion of the runtime screen.

14. The method of claim 13, further including updating the runtime screen while the plurality of icons are presented over the runtime screen.

15. Machine-readable storage including machine-readable instructions, when executed, to implement a method as claimed in one of claims 10 to 14.
